(19) **Europäisches Patentamt / European Patent Office / Office européen des brevets**

(11) **EP 4 319 246 A1**

(12) **EUROPEAN PATENT APPLICATION**
published in accordance with Art. 153(4) EPC

(43) Date of publication:
**07.02.2024 Bulletin 2024/06**

(21) Application number: **21933695.5**

(22) Date of filing: **30.03.2021**

(51) International Patent Classification (IPC):
**H04W 24/02** (2009.01)

(52) Cooperative Patent Classification (CPC):
**H04W 24/02**

(86) International application number:
**PCT/CN2021/084168**

(87) International publication number:
**WO 2022/205015 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **WU, Zuomin**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **SYNCHRONIZATION METHOD AND APPARATUS, AND TERMINAL DEVICE AND NETWORK DEVICE**

(57) Provided in the embodiments of the present application are a synchronization method and apparatus, and a terminal device and a network device. The method comprises: a terminal device determining a first time interval, wherein the first time interval is used for the terminal device to acquire synchronization information; and the terminal device acquiring the synchronization information on the basis of the first time interval, wherein the synchronization information is used for transmitting a first physical channel or a signal.

A terminal device determines a first time interval. The first time interval is configured to be used by the terminal device to acquire synchronization information —1001

The terminal device acquires the synchronization information based on the first time interval. The synchronization information is used to transmit a first physical channel or signal —1002

**FIG. 10**

**Description**

TECHNICAL FIELD

Embodiments of the present disclosure relate to the technical field of mobile communications, and in particular to a synchronization method and apparatus, a terminal device, and a network device.

BACKGROUND

Before a channel or a signal is transmitted between a terminal device and a network device, time-frequency synchronization needs to be achieved between the terminal device and the network device. However, during continuous transmission, since a transmission time of the channel or the signal is long, the time-frequency synchronization between the terminal device and the network device may fail. How to achieve the time-frequency synchronization between the terminal device and the network device again is a problem to be solved.

SUMMARY

Embodiments of the present disclosure provide a synchronization method and apparatus, a terminal device, and a network device.

A synchronization method provided by the embodiments of the present disclosure includes the following operations.

A terminal device determines a first time interval. The first time interval is configured to be used by the terminal device to acquire synchronization information.

The terminal device acquires the synchronization information based on the first time interval. The synchronization information is used to transmit a first physical channel or signal.

A synchronization method provided by the embodiments of the present disclosure includes the following operations.

A network device sends configuration information of a first time interval to a terminal device. The first time interval is configured to be used by the terminal device to acquire synchronization information, and the synchronization information is configured to be used by the terminal device to transmit a first physical channel or signal.

A synchronization apparatus provided by the embodiments of the present disclosure is applied to a terminal device, and the synchronization apparatus includes a determination unit and an acquisition unit.

The determination unit is configured to determine a first time interval. The first time interval is configured to be used by the terminal device to acquire synchronization information.

The acquisition unit is configured to acquire the synchronization information based on the first time interval. The synchronization information is used to transmit a first physical channel or signal.

A synchronization apparatus provided by the embodiments of the present disclosure is applied to a metwork device, and the synchronization apparatus includes a sending unit.

The sending unit is configured to send configuration information of a first time interval to a terminal device. The first time interval is configured to be used by the terminal device to acquire synchronization information, and the synchronization information is configured to be used by the terminal device to transmit a first physical channel or signal.

The terminal device provided by the embodiments of the present disclosure may be a first device in the above solution or a second device in the above solution. The communication device includes a processor and a memory. The memory is configured to store a computer program, and the processor is configured to invoke and run the computer program stored in the memory to perform the synchronization method described above.

The network device provided by the embodiments of the present disclosure may be the first device in the above solution or the second device in the above solution. The communication device includes a processor and a memory. The memory is configured to store a computer program, and the processor is configured to invoke and run the computer program stored in the memory to perform the synchronization method described above.

Embodiments of the present disclosure provide a chip to perform the synchronization method described above.

Specifically, the chip includes: a processor configured to invoke and run a computer program from a memory to make a device installed with the chip to perform the synchronization method described above.

Embodiments of the present disclosure provide a computer-readable storage medium configured to store a computer program. The computer program causes a computer to perform the synchronization method described above.

Embodiments of the present disclosure provide a computer program product including computer program instructions. The computer program instructions cause a computer to perform the synchronization method described above.

Embodiments of the present disclosure provide a computer program, which, when executed on a computer, causes a computer to perform the synchronization method described above.

By means of the technical solutions described above, a terminal device determines a first time interval, and acquires synchronization information in the first time interval, so as to use the synchronization information to transmit a first physical channel or signal. Using the technical solutions of the embodiments of the present disclosure can at least solve the problem of how to achieve synchronization between a terminal device and a network device again during continuous transmission.

BRIEF DESCRIPTION OF THE DRAWINGS

The drawings illustrated here are configured to provide a further understanding of the present disclosure, and constitute a part of the present disclosure. The illustrative embodiments of the present disclosure and the description thereof are used to explain the present disclosure, and do not constitute an improper limitation to the present disclosure. In the drawings:

FIG. 1 is a diagram of an application scenario according to an embodiment of the present disclosure.
FIG. 2 is an architectural diagram of another communication system according to an embodiment of the present disclosure.
FIG. 3 is an architectural diagram of another communication system according to an embodiment of the present disclosure.
FIG. 4 is a diagram of a Non Terrestrial Network (NTN) scenario based on a transparent payload satellite according to an embodiment of the present disclosure.
FIG. 5 is a diagram of an NTN scenario based on a regenerative payload satellite according to an embodiment of the present disclosure.
FIG. 6 is a first diagram of a timing relationship of an NTN system according to an embodiment of the present disclosure.
FIG. 7 is a second diagram of a timing relationship of an NTN system according to an embodiment of the present disclosure.
FIG. 8 is a diagram of a relationship between a Wake-Up Signal (WUS) and a Paging Occasion (PO) according to an embodiment of the present disclosure.
FIG. 9 is a diagram of a relationship between a Group WUS (GWUS) and a PO according to an embodiment of the present disclosure.
FIG. 10 is a flowchart of a synchronization method according to an embodiment of the present disclosure.
FIG. 11A is a first diagram of a relationship between a first time interval and a first physical channel or signal according to an embodiment of the present disclosure.
FIG. 11B is a second diagram of a relationship between a first time interval and a first physical channel or signal according to an embodiment of the present disclosure.
FIG. 11C is a third diagram of a relationship between a first time interval and a first physical channel or signal according to an embodiment of the present disclosure.
FIG. 12A is a first diagram of time domain resources in a first time interval according to an embodiment of the present disclosure.
FIG. 12B is a second diagram of time domain resources in a first time interval according to an embodiment of the present disclosure.
FIG. 12C is a third diagram of time domain resources in a first time interval according to an embodiment of the present disclosure.
FIG. 13 is a diagram of a first time interval of a first application example according to an embodiment of the present disclosure.
FIG. 14A is a first diagram of a first time interval of a second application example according to an embodiment of the present disclosure.
FIG. 14B is a second diagram of a first time interval of a second application example according to an embodiment of the present disclosure.
FIG. 15A is a first diagram of a first time interval of a third application example according to an embodiment of the present disclosure.
FIG. 15B is a second diagram of a first time interval of a third application example according to an embodiment of the present disclosure.
FIG. 15C is a diagram of a first time interval of a fourth application example according to an embodiment of the present disclosure.
FIG. 16 is a first structural composition diagram of a synchronization apparatus according to an embodiment of the present disclosure.

FIG. 17 is a second structural composition diagram of a synchronization apparatus according to an embodiment of the present disclosure.

FIG. 18 is a structural diagram of a communication device according to an embodiment of the present disclosure.

FIG. 19 is a structural diagram of a chip according to an embodiment of the present disclosure.

FIG. 20 is a block diagram of a communication system according to an embodiment of the present disclosure.

DETAILED DESCRIPTION

The technical solutions in the embodiments of the present disclosure are described below with reference to the drawings in the embodiments of the present disclosure. Evidently, the described embodiments are part of the embodiments of the present disclosure, rather than all of the embodiments. All other embodiments that are arrived at by a person of ordinary skill in the art based on the embodiments in the present disclosure without involving inventive efforts belong to the scope of protection of the present disclosure.

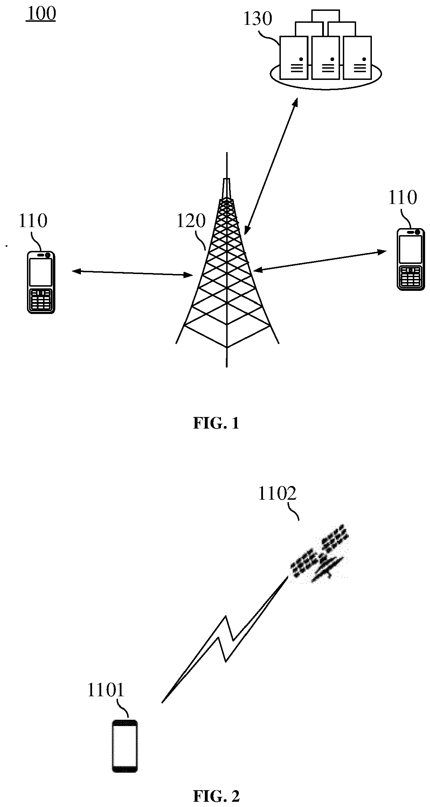

FIG. 1 is a diagram of an application scenario according to an embodiment of the present disclosure.

As shown in FIG. 1, a communication system 100 includes a terminal device 110 and a network device 120. The network device 120 may communicate with the terminal device 110 via an air interface. Multi-service transmission is supported between the terminal device 110 and the network device 120.

It should be understood that the embodiments of the present disclosure are illustratively described merely via the communication system 100, but are not limited thereto. That is, the technical solutions of the embodiments of the present disclosure can be applied to various communication systems, such as a Long Term Evolution (LTE) system, LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5th Generation (5G) communication system (also referred to as a New Radio (NR) communication system), a future communication system, or the like.

In the communication system 100 shown in FIG. 1, the network device 120 may be an access network device that communicates with the terminal device 110. The access network device may provide communication coverage for a particular geographic area, and may communicate with the terminal device 110 (e.g., a User Equipment (UE)) located within the coverage area.

The network device 120 may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN). Alternatively, the network device 120 may be a relay station, an access point, a vehicle-mounted device, a wearable device, a hub, a switch, a bridge, a router, a network device in a future evolved Public Land Mobile Network (PLMN), or the like.

The terminal device 110 may be an arbitrary terminal device, which may include, but is not limited to, a terminal device connected to the network device 120 or to other terminal devices in a wired or wireless manner.

The terminal device 110 may refer to an access terminal, a user equipment (UE), a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a handheld satellite terminal, a wireless local loop (WLL) station, a personal digital assistant (PDA), a handheld device with a wireless communication function, a computing device or other processing devices connected to a wireless modem, a vehicle-mounted device, a wearable device, a terminal device in a 5G network, a terminal device in a future evolved network, or the like.

The terminal device 110 may be used for Device to Device (D2D) communication.

The wireless communication system 100 may further include a core network device 130 communicating with a base station. The core network device 130 may be a 5G Core (5GC) device, such as an Access and Mobility Management Function (AMF), an Authentication Server Function (AUSF), a User Plane Function (UPF), and a Session Management Function (SMF). Optionally, the core network device 130 may also be an Evolved Packet Core (EPC) device of an LTE network, such as a Session Management Function + Core Packet Gateway (SMF+PGW-C) device. It should be understood that the SMF+PGW-C can implement both functions that can be implemented by an SMF and functions that can be implemented by a PGW-C. In a network evolution process, the core network device described above may also be called other names, or a new network entity can be formed by dividing functions of a core network, which would not be limited in the embodiments of the present disclosure.

Functional units in the communication system 100 may also be connected to each other by means of a Next Generation (NG) interface to perform communication.

For example, the terminal device establishes an air interface connection with the access network device by means of an NR interface to transmit user plane data and control plane signaling. The terminal device may establish a control plane signaling connection with an AMF by means of an NG interface 1 (N1 for short). The access network device (e.g., a next generation radio access base station (gNB)) may establish a user plane data connection with a UPF by means of an NG interface 3 (N3 for short). The access network device may establish a control plane signaling connection with the AMF by means of an NG interface 2 (N2 for short). The UPF may establish a control plane signaling connection with an SMF by means of an NG interface 4 (N4 for short). The UPF may exchange user plane data with a data network by means of an NG interface 6 (N6 for short). The AMF may establish a control plane signaling connection with the SMF by means of an NG interface 11 (N11 for short). The SMF may establish a control plane signaling connection with the PCF by means of an NG interface 7 (N7 for short).

FIG. 1 illustratively shows one base station, one core network device, and two terminal devices. Optionally, the wireless communication system 100 may include multiple base station devices, and there may be other numbers of terminal devices in the coverage area of each base station, which would not be limited in the embodiments of the present disclosure.

The 3GPP is studying the Non Terrestrial Network (NTN) technology. The NTN generically provides communication service to a ground user by means of satellite communication. Compared with ground cellular network communication, the satellite communication has many unique advantages. Firstly, satellite communication is not limited by region of users. For example, general land communication cannot cover regions where communication devices cannot be installed or communication coverage cannot be provided due to underpopulation, such as seas, mountains, deserts, etc.,. However, for the satellite communication, one satellite can cover large ground, and the satellite can perform orbital motion around the earth, so that each corner on the earth can theoretically be covered by the satellite communication. Secondly, the satellite communication has great social value. The satellite communication can cover remote mountain areas and poor and backward countries or regions with a lower cost, so that people of these regions can enjoy advanced voice communication and mobile internet technology, thereby facilitating reduction in the digital divide from developed regions, and facilitating development of these regions. Thirdly, a satellite communication distance is long, and the communication cost does not increase obviously as the communication distance increases. Finally, the satellite communication is highly stable, and is not vulnerable to natural disasters.

The NTN technology can be combined with various communication systems. For example, the NTN technology can be combined with an NR system to form an NR-NTN system. As another example, the NTN technology can be combined with an Internet of Things (IoT) system to form an IoT-NTN system. As an example, the IoT-NTN system may include an NB-IoT-NTN system and an eMTC-NTN system.

FIG. 2 is an architectural diagram of another communication system according to an embodiment of the present disclosure.

As shown in FIG. 2, the communication system includes a terminal device 1101 and a satellite 1102, and wireless communication may be performed between the terminal device 1101 and the satellite 1102. A network formed between the terminal device 1101 and the satellite 1102 may also be referred to as an NTN. In the architecture of the communication system shown in FIG. 2, the satellite 1102 may have functions of a base station, and the terminal device 1101 and the satellite 1102 may communicate with each other directly. In the system architecture, the satellite 1102 may be referred to as a network device. In some embodiments of the present disclosure, the communication system may include multiple network devices 1102, and there may be other numbers of terminal devices within the coverage area of each of the multiple network devices 1102, which would not be limited in the embodiments of the present disclosure.

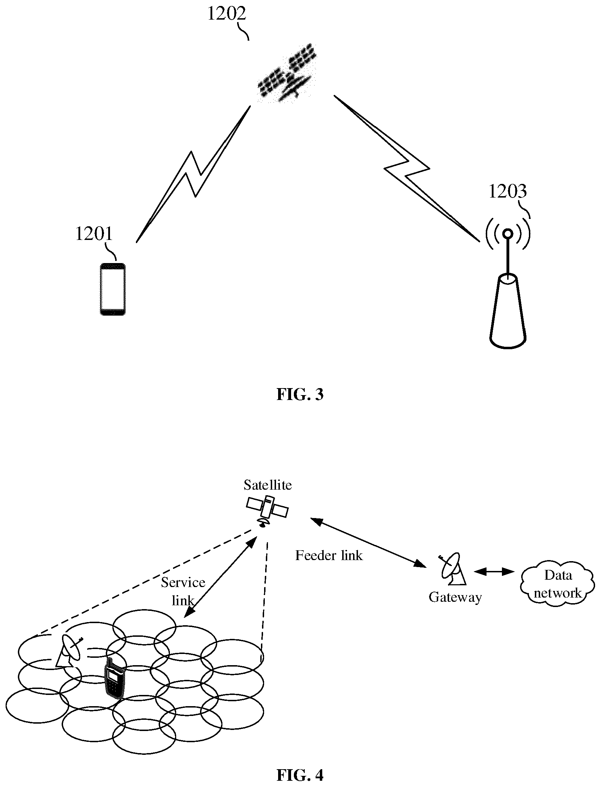

FIG. 3 is an architectural diagram of another communication system according to an embodiment of the present disclosure.

As shown in FIG. 3, the communication system includes a terminal device 1201, a satellite 1202, and a base station 1203. Wireless communication may be performed between the terminal device 1201 and the satellite 1202, and communication may be performed between the satellite 1202 and the base station 1203. A network formed by the terminal device 1201, the satellite 1202, and the base station 1203 may also be referred to as an NTN. In the architecture of the communication system shown in FIG. 3, the satellite 1202 may not have functions of a base station, and communication between the terminal device 1201 and the base station 1203 needs to be relayed through the satellite 1202. In this system architecture, the base station 1203 may be referred to as a network device. In some embodiments of the present disclosure, the communication system may include multiple network devices 1203, and there may be other numbers of terminals within the coverage area of each of the multiple network devices 1203, which would not be limited in the embodiments of the present disclosure. The network device 1203 may be the network device 120 in FIG. 1.

It should be understood that the satellite 1102 or the satellite 1202 described above may include, but is not limited to the following.

A Low-Earth Orbit (LEO) satellite, a Medium-Earth Orbit (MEO) satellite, a Geostationary Earth Orbit (GEO) satellite, a High Elliptical Orbit (HEO) satellite, etc. A satellite may use multiple beams to cover the ground. For example, one satellite may generate tens or even hundreds of beams to cover the ground. In other words, one satellite beam can cover a ground area having a diameter of tens to hundreds of kilometers, so as to ensure the coverage of the satellite and to improve a system capacity of the entire satellite communication system.

As an example, an altitude range of a LEO satellite may be 500 kilometers to 1500 kilometers, and a corresponding orbital period may be about 1.5 hours to 2 hours. A signal propagation delay of single-hop communication between users may be typically less than 20 milliseconds. A maximum satellite in-view time may be 20 minutes. The LEO satellite has a short signal propagation distance and low link loss, and has low requirements on transmission power of a user terminal. An orbital altitude of a GEO satellite may be 35786 km, and a period of revolution around the earth may be 24 hours. A signal propagation delay of single-hop communication between users may be typically 250 milliseconds.

To ensure the coverage of a satellite and to improve a system capacity of the entire satellite communication system, the satellite uses multiple beams to cover the ground. One satellite may generate tens of or even hundreds of beams to cover the ground. One satellite beam can cover a ground area having the diameter of tens to hundreds of kilometers.

It should be noted that FIG. 1 to FIG. 3 illustrate the system to which the present disclosure is applicable by means of examples. Certainly, methods shown by the embodiments of the present disclosure are also applicable to other systems. In addition, the terms "system" and "network" herein are often used interchangeably herein. The term "and/or" herein is merely to describe the associations of associated objects, indicating that there may be three kinds of relationships. For example, A and/or B may indicate three situations in which A exists alone, A and B exist simultaneously, or B exists alone. In addition, the character "/" herein generally indicates that the associated objects before and after this character are in an "or" relationship. It should also be understood that "indication" mentioned in the embodiments of the present disclosure may be a direct indication or an indirect indication, or may indicate the presence of an association relationship. For example, A indicating B may indicate that A indicates B directly. For example, B may be acquired via A. A indicating B may also indicate that A indicates B indirectly. For example, A indicates C, and B may be acquired via C. A indicating B may also indicate that an association relationship between A and B is present. It should also be understood that "corresponding" mentioned in the embodiments of the present disclosure may indicate that a direct or indirect correspondence between two parties is present, or may indicate that an association relationship between two parties is present, or may be relationships such as a relationship between the indicating and the indicated, a relationship between the configuring and the configured, etc. It should also be understood that "predefined" or "predefined rules" mentioned in the embodiments of the present disclosure may be implemented by storing corresponding codes and tables in devices (for example, including a terminal device and a network device) in advance or by using other methods for indicating relevant information, and specific implementation manners thereof are not limited in the present disclosure. For example, predefined may means predefined in a protocol. It should also be understood that the "protocols" in the embodiments of the present disclosure may refer to standard protocols in the field of communications, including, for example, an LTE protocol, an NR protocol, and related protocols that are used in future communication systems. The present disclosure is not limited thereto.

Satellites may be divided, according to the functions provided thereby, into two categories: transparent payload satellites and regenerative payload satellites. A transparent payload satellite merely provides radio frequency filtering, frequency conversion and amplification functions, merely provides transparent forwarding of signals, and does not change any wave signal forwarded thereby. A regenerative payload satellite may further provide demodulation/decoding, routing/conversion and coding/modulation functions in addition to radio frequency filtering, frequency conversion and amplification functions, and has some or all functions of a base station.

An NTN may include one or more gateways for communication between a satellite and a terminal.

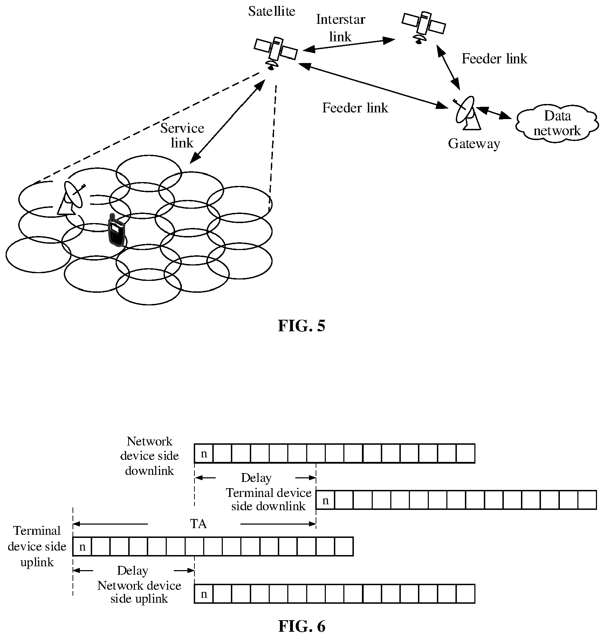

FIG. 4 and FIG. 5 respectively show a diagram of an NTN scenario based on a transparent payload satellite and a diagram of an NTN scenario based on a regenerative payload satellite.

As shown in FIG. 4, for an NTN scenario based on a transparent payload satellite, communication between a gateway and a satellite is performed via a feeder link, and communication between the satellite and a terminal may be performed via a service link. As shown in FIG. 5, for an NTN scenario based on a regenerative payload satellite, communication between satellites is performed via an interstar link. Communication between a gateway and a satellite is performed via a feeder link. Communication between a satellite and a terminal may be performed via a service link.

To facilitate the understanding of the technical solutions of the embodiments of the present disclosure, the following related technologies of the embodiments of the present disclosure are described below. The following related technologies can be arbitrarily combined with the technical solutions of the embodiments of the present disclosure as optional solutions, all of which belong to the scope of protection of the embodiments of the present disclosure.

**Timing relationship of an IoT-NTN system**

In a land communication system, a propagation delay of signal communication is typically less than 1 millisecond. In an IoT-NTN system, since a communication distance between a terminal device and a satellite (or a network device) is very long, a propagation delay of signal communication is very long, which may range from tens of milliseconds to hundreds of milliseconds and specifically depends on an orbital altitude of the satellite and a service type of satellite communication. To deal with a long propagation delay, a timing relationship of the IoT-NTN relative to an IoT system needs to be enhanced.

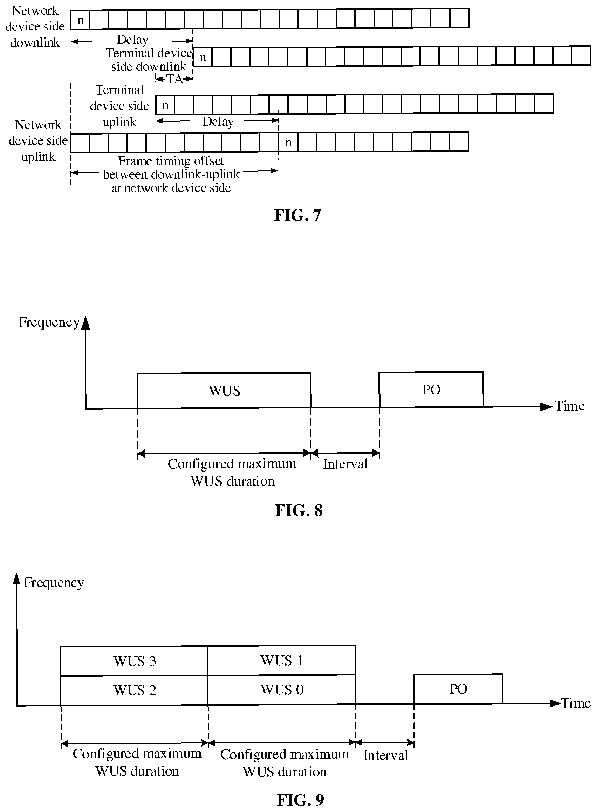

In the IoT-NTN system, which is the same as that in an IoT system, a terminal device needs to consider an effect of a timing advance (TA) when performing uplink transmission. Since the propagation delay in the system is long, a range of the TA value is relatively large. When the terminal device is scheduled to perform uplink transmission in a subframe n, the terminal device considers a round trip propagation delay, and performs early transmission for the uplink transmission, so that a signal arriving at a network device side is in an uplink subframe n of the network device side. Specifically, the timing relationship in the IoT-NTN system may include two cases, which are as shown in FIG. 6 and FIG. 7, respectively.

A first case is shown in FIG. 6. A downlink subframe at the network device side is aligned with an uplink subframe at the network device side. Accordingly, to make uplink transmission of a terminal device arriving at the network device side to be aligned with the uplink subframe at the network device side, the terminal device needs to use a large TA value. In some cases, the TA value corresponds to a timing offset value Koffset. In some other cases, a round trip time (RTT) of the terminal device corresponds to the timing offset value Koffset.

A second case is shown in FIG. 7. An offset value is present between a downlink subframe at the network device side and an uplink subframe at the network device side. In this case, to make the uplink transmission of the terminal device arriving at the network device side to be aligned with the uplink subframe at the network device side, the terminal device only needs to use a small TA value. In some cases, the TA value corresponds to a timing offset value Koffset.

**eMTC system**

In an enhance Machine Type Communication (eMTC) system, terminal devices include a Bandwidth reduced Low complexity (BL)/Coverage Enhancement (CE) terminal device. The BL/CE terminal device includes two modes, i.e., a CEModeA mode and a CEModeB mode. The CEModeA mode supports coverage enhancement level 0 and coverage enhancement level 1, and the CEModeB mode supports coverage enhancement level 2 and coverage enhancement level 3. The coverage enhancement level 0 corresponds to a scenario where signal intensity is optimal, and the coverage enhancement level 3 corresponds to a scenario where signal intensity is the poorest. A bandwidth received and transmitted by the BL/CE terminal device is a narrow band, and includes, for example, six consecutive Resource Blocks (RBs) in a bandwidth of an LTE cell. If the bandwidth of the LTE cell is larger than six RBs, the bandwidth of the LTE cell may include multiple narrow bands, and each narrow band corresponds to a narrow band number.

In the eMTC system, in an initial access stage, a Physical Random Access Channel (PRACH) can support up to 128 retransmissions. For the CEModeA, a Physical Uplink Shared Channel (PUSCH) can support up to 32 retransmissions. For the CEModeB, the PUSCH can support up to 2048 retransmissions.

In the eMTC system, the network device can provide service for a stationary terminal device, and can also provide service for a terminal device having a certain speed of movement. For example, a Doppler spread resulting from the speed of movement of the terminal device may be 200 Hertz (e.g., approximately 240 kilometers per hour at one megahertz, and approximately 120 kilometers per hour at two megahertz). The eMTC system may also support dense Positioning Reference Signal (PRS) configuration and a new time interval pattern corresponding to the dense PRS configuration.

In delay reduction, the following features are supported in the eMTC system.

(1) In the case that Evolved Universal Terrestrial Radio Access (E-UTRA) Absolute Radio Frequency Channel Number (EARFCN) preconfiguration is available, an initial access procedure of the terminal device can be accelerated by preconfiguring the EARFCN and a geographic area for the terminal device.

(2) In one cell, when the terminal device needs to re-achieve time-frequency synchronization, the terminal device may achieve the same via a Resynchronization Signal (RSS) instead of a Primary Synchronization Signal/ Secondary Synchronization Signal (PSS/SSS) signal, thereby conserving time and reducing power consumption.

(3) The number of times of acquisition of a Master Information Block (MIB) and a System Information Block (SIB) 1 or SIB 2 is reduced by acquisition of an enable enhanced Cell Global Identity (CGI).

(4) A flag bit is introduced to the MIB to indicate whether a SIB message has been updated within preceding N hours. N represents a valid time of a system message, and for example, the value of N may be 3 or 24 hours. That is, the terminal device does not acquire the SIB 1 message frequently, thereby conserving the time and reducing the power consumption. The system message update indication is also copied in an RSS. That is, the terminal device may not need to acquire the MIB message frequently.

(5) Preconfigured Uplink Resource (PUR). The terminal device in an idle state may perform PUSCH transmission by using an uplink resource preconfigured by the network device, and does not need to complete a random access procedure. The terminal device in a connected state may request to be configured with a PUR or request PUR configuration release. The network device may configure the PUR for the terminal device based on a request of the terminal device, registration information of the terminal device and/or a local policy. The PUR is valid only in a cell where a cell PUR configuration is received. When an upper layer requests re-establishment or recovery of an RRC connection, when the terminal device is configured with a valid PUR, and when a TA validity criterion is satisfied, PUR transmission may be triggered.

During this uplink transmission, the terminal device may detect, in a PUR search space window, an acknowledgement (ACK) or fallback mode indication information carried in a Machine-Type Communications (MTC) Physical Downlink Control Channel (MPDCCH) scrambled via a PUR-Radio Network Temporary Identity (RNTI). As an example, if an end subframe of PUSCH transmission performed by the terminal device by using a preconfigured uplink resource is a subframe n, the terminal device detects the MPDCCH in a PUR-MPDCCH search window starting from a subframe n+4, and stops MPDCCH detection in the PUR-MPDCCH search window upon detecting an MPDCCH scrambled via the PUR-RNTI. A length of the PUR-MPDCCH search window is configured by a higher-level parameter.

Regarding power consumption reduction, in addition to the features described above, the eMTC system further supports the following functions.

(1) Wake-Up Signals (WUS). The terminal device in the idle state may detect an MPDCCH via WUS detection. When the terminal device in the idle state is configured with extended Discontinuous Reception (eDRX), a length of the DRX cycle may be up to 10.24 seconds. A maximum value may be 2621.44 seconds (43.69 minutes).

In the case that a WUS or a group WUS (GWUS) is configured, power consumption of paging detection can be reduced. The terminal device detects the WUS or the GWUS only in a last used cell. The WUS or the GWU is configured to indicate that the terminal device should receive an MPDCCH paging message in this cell. For a terminal device not configured with the eDRX, the WUS or the GWUS may be associated with one or more paging occasions (POs) in a paging time window (PTW). If the terminal device detects a WUS or a group WUS, the terminal device detects the next N POs, N > 1, until the terminal device receives a paging message.

A time relationship between the WUS and the PO is as shown in FIG. 8, and a time relationship between the GWUS and the PO is as shown in FIG. 9. The terminal device may expect WUS retransmission in a configured maximum WUS duration. However, an actually transmitted WUS may be short. In a non-0 gap, the terminal device does not detect the WUS.

(2) Early Data Transmission (EDT). For a scenario where the terminal device needs to transmit only small data having a data volume of, for example, about 100 bytes, the terminal device may transmit the data via message 3 (Msg3) and message 4 (Msg4) in a random access procedure. In addition, the network device may also indicate fallback to a legacy random access procedure at any time point in an EDT procedure.

(3) Hybrid Automatic Repeat-reQuest Acknowledgement (HARQ-ACK) feedback of uplink transmission. In a process in which a terminal device is scheduled to perform uplink transmission, introduction of HARQ-ACK feedback information to the MPDCCH can allow the network device to indicate to the terminal device that the uplink transmission has been received correctly, so that the terminal device terminates MPDCCH detection or PUSCH transmission in advance.

(4) Relaxed Measurement of Cell Reselection. For a stationary terminal device, in the case that a criterion for relaxed measurement is satisfied, the terminal device may reduce neighboring cell measurement. For example, neighboring cell measurements is only performed every 24 hours.

In addition, for a terminal device at a high coverage enhancement level, tens, hundreds, or even thousands of retransmissions are needed, so that a large amount of resource consumption is typically associated. To enhance access control of a network device, an access barring mechanism based on the coverage enhancement level is further introduced to the eMTC system. For example, if it is specified that access by a terminal device at a certain coverage enhancement level is barred, access by all terminal devices having coverage enhancement levels higher than or equal to the coverage enhancement level is barred.

**Time-frequency synchronization in the IoT-NTN system**

In the IoT-NTN system (e.g., an eMTC-NTN system), the network device needs to send to the terminal device synchronization assistance information (e.g., ephemeris information of a service satellite, etc.,) so that the terminal device can complete time domain and/or frequency domain synchronization. Accordingly, the terminal device needs to acquire the synchronization assistance information sent by the network device, and complete corresponding time domain and/or frequency domain synchronization according to a Global Navigation Satellite System (GNSS) capability thereof.

The range of TA values in the IoT-NTN system may be very large. In a random access procedure, before sending a random access preamble sequence, the terminal device needs to perform TA pre-compensation first according to estimated TA information, and transmits a PRACH sequence.

When the terminal device is in the idle state, if the terminal device receives the paging message or the WUS, the terminal device needs to perform time-frequency synchronization upon receiving the paging message or the WUS, and then perform transmission, for example, initiate a random access procedure.

A terminal device in the IoT-NTN system typically cannot use simultaneously the GNSS capability and the capability to perform reception and transmission in the IoT-NTN system. The GNSS capability of the terminal device is implemented by a GNSS module, and the capability of performing reception and transmission by the terminal device in the IoT-NTN system is implemented by an IoT-NTN system work module. When the terminal device is in the idle state, if the terminal device receives a paging message or a WUS, the terminal device needs to perform time-frequency synchronization upon receiving the paging message or WUS. Alternatively, the terminal device needs to perform time-frequency synchronization in advance so as to receive the paging message or WUS. In this process, the terminal device may need to activate the GNSS module to acquire the location of the terminal device (e.g., completing GNSS Time To First Fix (TTFF)), switch from the GNSS module to the IoT-NTN system work module, receive an NTN-SIB via the IoT-NTN system work module, and acquire the ephemeris information of the service satellite from the NTN-SIB. One GNSS TTFF typically requires one second (hot start if GNSS ephemeris information corresponding to the last TTFF is acquired within four hours) or less than five seconds (warm start if GNSS calendar information corresponding to the last TTFF is acquired within 180 days). How to trigger a GNSS search in the IoT-NTN system is a problem to be solved.

In the eMTC system, a PRACH can support up to 128 retransmissions. For the CEModeA, a PUSCH can support up to 32 retransmissions. For CEModeB, a PUSCH can support up to 2048 retransmissions. In the NTN system, in a LEO scenario of 600 kilometers, a timing offset is about 0.71 microseconds for one RTT with the length of 28.4 milliseconds, and a total timing offset is about 6.4 microseconds for one RTT with the length of 256 milliseconds, which exceeds the length of a cyclic prefix of a PUSCH. In addition, a Doppler frequency shift change is 544 Hertz/second.

Time for uplink transmission is long. For example, a time length of continuous transmission is greater than 256 milliseconds. Changes in the timing offset and the Doppler shift is greater in the NTN system. Thus, in the IoT-NTN system, during continuous uplink channel transmission, how to perform resynchronization for the uplink transmission is a problem to be solved. To this end, the following technical solutions of the embodiments of the present disclosure are proposed.

It should be noted that although the related solutions described above are illustrated via uplink synchronization, the technical solutions of the embodiments of the present disclosure can solve not only the problem of uplink synchronization, but also the problem of downlink synchronization.

It should be noted that the technical solutions of the embodiments of the present disclosure can be applied to, but are not limited to, a NR-NTN system and an IoT-NTN system.

To facilitate understanding of the technical solutions of the embodiments of the present disclosure, the technical solutions of the present disclosure would be described in detail below by means of specific embodiments. The related technology described above can be arbitrarily combined with the technical solutions of the embodiments of the present disclosure as optional solutions, all of which belong to the scope of protection of the embodiments of the present disclosure. Embodiments of the present disclosure include at least some of the following.

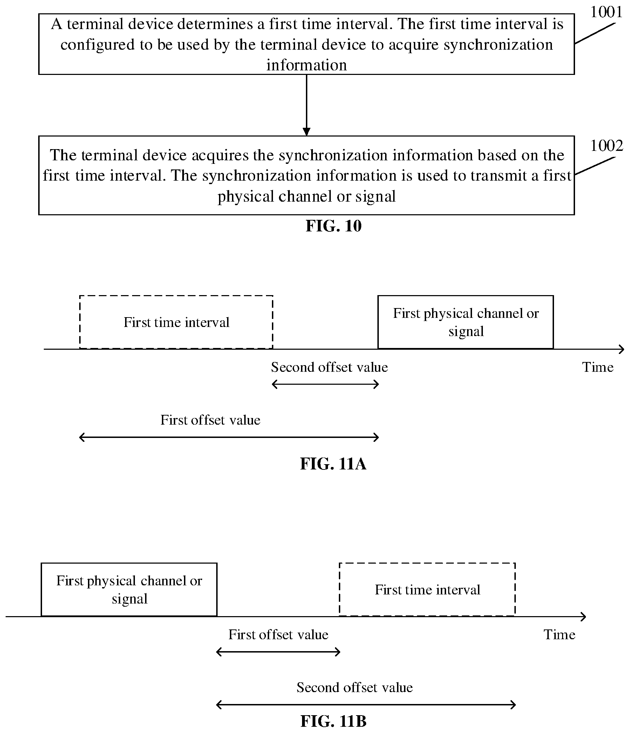

FIG. 10 is a flowchart of a synchronization method according to an embodiment of the present disclosure. As shown in FIG. 10, the synchronization method includes the following operations.

At block 1001, a terminal device determines a first time interval. The first time interval is configured to be used by the terminal device to acquire synchronization information.

At block 1002, the terminal device acquires the synchronization information based on the first time interval. The synchronization information is used to transmit a first physical channel or signal.

In some embodiments, the terminal device determines the first time interval, which includes the following operation. The terminal device determines at least one of a length of the first time interval, a start position of the first time interval and an end position of the first time interval.

In some embodiments, the length of the first time interval is determined in the following manners.

The length of the first time interval is predefined; or
The length of the first time interval is determined according to a predefined rule; or
The length of the first time interval is acquired according to configuration information of a network device.

In some embodiments, the start position of the first time interval is determined in the following manners.

The start position of the first time interval is predefined; or
The start position of the first time interval is determined according to a predefined rule; or
The start position of the first time interval is acquired according to the configuration information of a network device.

In some embodiments, the end position of the first time interval is determined in the following manners.

The end position of the first time interval is predefined; or
The end position of the first time interval is determined according to a predefined rule; or
The end position of the first time interval is acquired according to the configuration information of a network device.

In some embodiments, for the network device, the network device sends configuration information of a first time interval to a terminal device. The first time interval is configured to be used by the terminal device to acquire synchronization information, and the synchronization information is configured to be used by the terminal device to transmit a first physical channel or signal. In some embodiments, the configuration information of the first time interval includes at least one of the following: a length of the first time interval, a start position of the first time interval, or an end position of the first time interval.

In some embodiments, the configuration information of the network device in the solutions described above is transmitted via at least one of the following information: a system message, a paging message, a Wake-Up Signal (WUS), a Radio Resource Control (RRC) signaling, a Media Access Control (MAC) Control Element (CE), or Downlink Control Information (DCI).

In some embodiments, the first time interval is determined according to at least one of a first offset value or a second offset value. The first offset value is used to determine a distance between the start position of the first time interval and the first physical channel or signal, and the second offset value is used to determine a distance between the end position of the first time interval and the first physical channel or signal.

In some embodiments, the first offset value is predefined or is determined according to a predefined rule, and/or the second offset value is predefined or is determined according to a predefined rule.

In some embodiments, for the network device, the network device sends the configuration information of the first time interval to the terminal device. The configuration information of the first time interval includes at least one of a first offset value or a second offset value. The first offset value is used to determine a distance between the start position of the first time interval and the first physical channel or signal, and the second offset value is used to determine a distance between the end position of the first time interval and the first physical channel or signal.

In some embodiments, the first time interval is before the first physical channel or signal in time domain, and the first offset value is used to determine a distance between the start position of the first time interval and a start position of the first physical channel or signal. Alternatively, the first time interval is after the first physical channel or signal in the time domain, and the first offset value is used to determine a distance between an end position of the first physical channel or signal and the start position of the first time interval.

In some embodiments, the first time interval is before the first physical channel or signal in the time domain, and the second offset value is used to determine a distance between the end position of the first time interval and the start position of the first physical channel or signal. Alternatively, the first time interval is after the first physical channel or signal in the time domain, and the second offset value is used to determine a distance between the end position of the first physical channel or signal and the end position of the first time interval.

In some embodiments, the lengths of the first time interval are different in different cases, and/or uses of the first time interval are different in different cases. For example, the length of the first time interval used for downlink synchronization is different from the length of the first time interval used for uplink synchronization.

In some embodiments, the length of the first time interval is greater than 40 milliseconds.

As an example, referring to FIG. 11A, the first time interval is before the first physical channel or signal in the time domain. The first offset value is used to determine the distance between the start position of the first time interval and the start position of the first physical channel or signal. The second offset value is used to determine the distance between the end position of the first time interval and the start position of the first physical channel or signal.

As an example, referring to FIG. 11B, the first time interval is after the first physical channel or signal in the time domain. The first offset value is used to determine the distance between the end position of the first physical channel or signal and the start position of the first time interval. The second offset value is used to determine the distance between the end position of the first physical channel or signal and the end position of the first time interval.

In some embodiments, the first time interval has a first association relationship with the first physical channel or signal. The first association relationship is acquired via at least one of a system message, a paging message, a WUS, an RRC signaling, an MAC CE, and DCI. Alternatively, the first association relationship is predefined, or the first association relationship is acquired according to a predefined rule.

In some embodiments, the first association relationship is predefined, or the first association relationship is acquired according to the predefined rule, which includes the following.

The first time interval is before the first physical channel or signal in the time domain; or
The first time interval is after the first physical channel or signal in the time domain; or
The first time interval is located within the first physical channel or signal in the time domain.

As an example, in the case that the first physical channel or signal is an uplink physical channel or an uplink reference signal, the first time interval is before the first physical channel or signal in the time domain, or the first time interval is used for the uplink synchronization.

As an example, in the case that the first physical channel or signal is a downlink physical channel or a downlink reference signal, the first time interval is before the first physical channel or signal in the time domain, or the first time interval is used for downlink synchronization.

As an example, in the case that the first physical channel or signal is the downlink physical channel or the downlink reference signal, the first time interval is after the first physical channel or signal in the time domain, or the first time interval is used for uplink synchronization of subsequent uplink transmission.

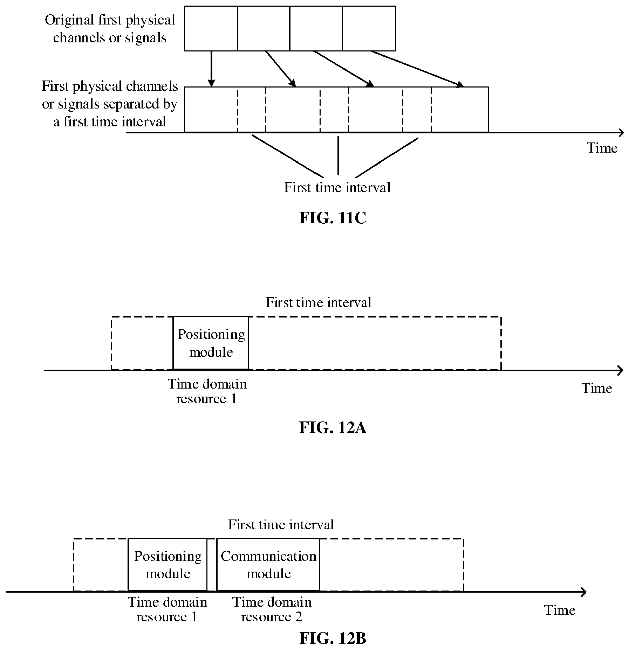

As an example, referring to FIG. 11C, one or more first time intervals are distributed within the first physical channel or signal.

In some embodiments, for the network device, the network device sends third information. The third information is used to determine the first association relationship and is carried in at least one of the following messages: a system message, a paging message, a WUS, an RRC signaling, an MAC CE, or DCI.

In some embodiments, the first time interval has a second association relationship with second information, and the second information includes at least one of the following: a satellite scenario, a terminal device capability, or a coverage enhancement level.

In some embodiments, the second association relationship is acquired via at least one of a system message, a paging message, a WUS, an RRC signaling, an MAC CE, and DCI. Alternatively, the second association relationship is predefined, or the second association relationship is acquired according to a predefined rule.

In some embodiments, the second information includes a satellite scenario, and the second association relationship includes the following.

The length of the first time interval is determined according to the satellite scenario; or
The length of the first time interval is configured by the network device according to the satellite scenario.

As an example, in a GEO satellite scenario, the length of the first time interval is L1, and in a LEO satellite scenario, the first time interval is L2. The value of L1 is greater than the value of L2.

In some embodiments, the second information includes a terminal device capability, and the second association relationship includes the following.

The length of the first time interval is determined according to the terminal device capability, or
The length of the first time interval is configured by the network device according to the terminal device capability.

As an example, the terminal device determines the first time interval according to the terminal device capability supported by the terminal device. For example, the terminal device supports a first coverage enhancement level, and the terminal device determines that the length of the first time interval is L1. Alternatively, the terminal device supports a second coverage enhancement level, and the terminal device determines that the length of the first time interval is L2. For example, the terminal device supports the CEModeA mode, and the terminal device determines that the length of the first time interval is L1. Alternatively, the terminal device supports the CEModeB mode, and the terminal device determines that the length of the first time interval is L2.

As an example, the network device configures the length of the first time interval according to the terminal device capability. Optionally, the terminal device reports, to the network device, the terminal device capability supported by the terminal device. For example, if the terminal device capability supports the first coverage enhancement level, the network device configures the first time interval within a first time interval configuration range. If the terminal device capability supports the second coverage enhancement level, the network device configures the first time interval within a second time interval configuration range. For example, if the terminal device capability supports the CEModeA mode, the network device configures the first time interval within the first time interval configuration range. If the terminal device capability supports the CEModeB mode, the network device configures the first time interval within the second time interval configuration range.

In some embodiments, the second information includes a coverage enhancement level, and the second association relationship includes the following.

The length of the first time interval is determined according to the coverage enhancement level corresponding to the terminal device; or
The length of the first time interval is configured by the network device according to the coverage enhancement level.

As an example, the terminal device determines the first time interval according to the coverage enhancement level corresponding to the terminal device. For example, the terminal device corresponds to a first coverage enhancement level, and the terminal device determines that the length of the first time interval is L1. Alternatively, the terminal device corresponds to a second coverage enhancement level, and the terminal device determines that the length of the first time interval is L2.

As an example, the network device configures the length of the first time interval according to the coverage enhancement level corresponding to the terminal device. For example, if the terminal device corresponds to the first coverage enhancement level, the network device configures the first time interval within the first time interval configuration range. If the terminal device corresponds to the second coverage enhancement level, the network device configures the first time interval within the second time interval configuration range.

In some embodiments, for the network device, the network device sends fourth information. The fourth information is used to determine the second association relationship and is carried in at least one of the following messages: a system message, a paging message, a WUS, an RRC signaling, an MAC CE, or DCI.

In the embodiment of the present disclosure, the first time interval is configured to be used by the terminal device to acquire the synchronization information. In some embodiments, the synchronization information includes at least one of the following: uplink timing synchronization, uplink frequency offset synchronization, downlink timing synchronization, or downlink frequency offset synchronization.

The uplink timing synchronization is configured to be used by the terminal device to implement uplink time domain synchronization. The uplink frequency offset synchronization is configured to be used by the terminal device to implement uplink frequency domain synchronization. The downlink timing synchronization is configured to be used by the terminal device to implement downlink time domain synchronization. The downlink frequency offset synchronization is configured to be used by the terminal device to implement downlink frequency domain synchronization.

In some embodiments, the terminal device performs the uplink frequency domain synchronization and/or the uplink time domain synchronization based on the uplink timing synchronization and/or the uplink frequency offset synchronization. As understood from another aspect, the terminal device sends the first physical channel or signal based on at least one of the uplink timing synchronization or the uplink frequency offset synchronization.

In some embodiments, the terminal device performs the downlink frequency domain synchronization and/or the downlink time domain synchronization based on the downlink timing synchronization and/or the downlink frequency offset synchronization. As understood from another aspect, the terminal device sends the first physical channel or signal based on at least one of the downlink timing synchronization or the downlink frequency offset synchronization.

In the embodiments of the present disclosure, the synchronization information is acquired by a positioning module and/or a communication module of the terminal device.

Herein, the terminal device has at least one of the positioning module or the communication module. In some embodiments, in the case that the terminal device has the positioning module and the communication module, the positioning module and the communication module of the terminal device cannot operate at the same time.

In some embodiments, the positioning module of the terminal device includes a GNSS module.

In some embodiments, the communication module of the terminal device is configured to implement communication functions of the terminal device in a mobile communication system, and as an example, the mobile communication system may be, but is not limited to, the IoT-NTN system.

In the embodiment of the present disclosure, the synchronization information is acquired based on first information, and the first information including at least one of the following: timing information, timing change information, frequency offset information, frequency offset change information, location information, or ephemeris information.

In some embodiments, the timing information includes common timing information.

In some embodiments, the timing change information includes common timing change information.

In some embodiments, the frequency offset information includes common frequency offset information.

In some embodiments, the frequency offset change information includes common frequency offset change information.

In some embodiments, the location information includes at least one of location information of the terminal device or location information of the network device.

In some embodiments, the ephemeris information includes at least one of ephemeris information of a service satellite or ephemeris information of a non-service satellite. The ephemeris information includes at least one of satellite location information or satellite velocity information.

In some embodiments, the positioning module of the terminal device is configured to acquire the first information via a positioning search (e.g., a GNSS search) function. As an example, the positioning module of the terminal device is configured to acquire at least one of the following information of the first information: the location information of the terminal device or the ephemeris information of the non-service satellite.

In some embodiments, the communication module of the terminal device is configured to acquire at least one of the system message or the downlink reference signal, and at least one of the system message or the downlink reference signal carries the first information. As an example, at least one of the system message or the downlink reference signal carries at least one of the following information of the first information: common timing information, common timing change information, common frequency offset information, common frequency offset change information, location information of the network device, or ephemeris information of the service satellite.

In some embodiments, the terminal device acquires information such as the location of the terminal device, etc., based on the Global Navigation Satellite System (GNSS) of the terminal device. In addition, the terminal device can calculate a timing and frequency offset based on information acquired by the GNSS and the synchronization assistance information (e.g., the ephemeris information of the service satellite) indicated by the network device, and applies timing advance compensation or frequency offset adjustment in an idle state or an inactive state or a connected state.

In addition, the network device may broadcast a common timing offset value.

In some embodiments, the terminal device estimates a UE-specific TA based on the location of the terminal device acquired by the GNSS and the ephemeris information of the service satellite indicated by the network device.

In some embodiments, the terminal device estimates the UE-specific TA based on a reference time acquired by the GNSS and a reference time indicated by the network device.

In some embodiments, for example, before a random access procedure is initiated (before Msg1 or MsgA is transmitted), the terminal device in the idle state or the inactive state may calculate the TA value according to the following formula.

$$TA = (N_{TA, \text{ UE-specific}} + N_{TA, \text{ offset}} + N_{TA, \text{ common}}) * Ts.$$

$N_{TA, \text{ UE-specific}}$ may be a UE-specific TA value estimated by the terminal device. $N_{TA, \text{ offset}}$ is the same as that in existing protocols. For example, $N_{TA, \text{ offset}}$ is determined according to status of coexistence between a networking frequency band and LTE or NR, or is predefined, or is indicated by the network device, or is set to 0. $N_{TA, \text{ common}}$ is determined according to at least one of the timing information or the timing change information. Ts represents a unit of a sampling time interval.

In some cases, Ts = 1/(15 * 1000 * 2048).

In some cases, if the terminal device does not acquire at least one of the timing information or the timing change information, $N_{TA, \text{ common}}$ is a preset value, or $N_{TA, \text{ common}}$ is 0.

In some embodiments, for example, if the terminal device receives the TA value indicated by the network device, the TA value may be calculated according to the following formula:

$$TA = (N_{TA} + N_{TA, \text{ UE-specific}} + N_{TA, \text{ common}} + N_{TA, \text{ offset}}) * Ts.$$

$N_{TA, \text{ UE-specific}}$ may be a TA value estimated by the terminal device. $N_{TA, \text{ offset}}$ is the same as that in existing protocols. For example, $N_{TA, \text{ offset}}$ is determined according to the status of coexistence between the networking frequency band and LTE or NR, or is predefined, or is indicated by the network device, or is set to 0. $N_{TA}$ may be a TA value indicated by the network device via a Random Access Response (RAR) or a timing advance command MAC CE. $N_{TA, \text{ common}}$ is determined according to at least one of the timing information or the timing change information. Ts represents the unit of the sampling time interval.

In some cases, Ts = 1/(15 * 1000 * 2048).

In some cases, if the terminal device does not acquire at least one of the timing information or the timing change information, $N_{TA, \text{ common}}$ is a preset value, or $N_{TA, \text{ common}}$ is 0.

That is, in some cases, the terminal device needs to estimate and update the TA according to a combination of the TA value estimated by the terminal device, the timing information and/or the timing change information broadcast by the network device, and the TA value $N_{TA}$ sent by the network device.

In some embodiments, the first physical channel or signal includes an uplink physical channel or an uplink reference signal, and the synchronization information is used to send the first physical channel or signal. As an example, the first physical channel or signal includes at least one of the following: a Physical Random Access Channel (PRACH), an Msg3 in a random access procedure, a Physical Uplink Shared Channel (PUSCH), a Physical Uplink Control Channel (PUCCH), Early Data Transmission (EDT), or transmission based on Preconfigured Uplink Resource (PUR). As an example, for the NR-NTN system, the first physical channel or signal further includes an MsgA in a random access procedure. The MsgA includes an MsgA PRACH and an MsgA PUSCH.

In some embodiments, the first physical channel or signal includes a downlink physical channel or a downlink reference signal, and the synchronization information is used to receive the first physical channel or signal. As an example, the first physical channel or signal includes at least one of the following: a WUS, a Physical Downlink Control Channel (PDCCH) scrambled via a Paging-Radio Network Temporary Identity (P-RNTI), a paging message, a synchronization signal, or a system message. Herein, the system message includes at least one of a MIB or a SIB. As an example, for the NTN system, the SIB includes a SIB dedicated to the NTN system (NTN-SIB).

In some embodiments, the synchronization information includes a TA value corresponding to uplink timing synchronization of the terminal device, and the terminal device performs TA adjustment based on the first time interval and the TA value.

In some embodiments, time domain resources in the first time interval satisfy at least one of the following features.

At least part of the time domain resources in the first time interval is not configured to be used by a communication module of the terminal device to perform reception or transmission.

At least part of the time domain resources in the first time interval is configured to be used by a positioning module of the terminal device to perform a search.

At least part of the time domain resources in the first time interval is configured to be used by the communication module of the terminal device to receive at least one of a system message or a downlink reference signal sent by a network device.

At least part of the time domain resources in the first time interval is configured to be used by the terminal device to perform the TA adjustment.

As an example, referring to FIG. 12A, a time domain resource 1 in the first time interval is used by the positioning module of the terminal device to perform the search, but the time domain resource 1 in the first time interval is not used by the communication module of the terminal device for the reception or the transmission.

As an example, referring to FIG. 12B, a time domain resource 1 in the first time interval is used by the positioning module of the terminal device to perform the search, and a time domain resource 2 in the first time interval is used by the communication module of the terminal device to receive at least one of a system message or a downlink reference signal sent by the network device. Alternatively, the time domain resource 1 in the first time interval is used by the communication module of the terminal device to receive at least one of the system message or the downlink reference signal sent by the network device, and the time domain resource 2 in the first time interval is used by the positioning module of the terminal device to perform the search. Herein, the positioning module and the communication module of the terminal device cannot operate at the same time, and the time domain resource 1 corresponding to the positioning module and the time domain resource 2 corresponding to the communication module cannot overlap. It should be noted that since the terminal device needs a certain time to perform switching between the positioning module and the communication module, a small interval may be present between the time domain resource 1 and the time domain resource 2.

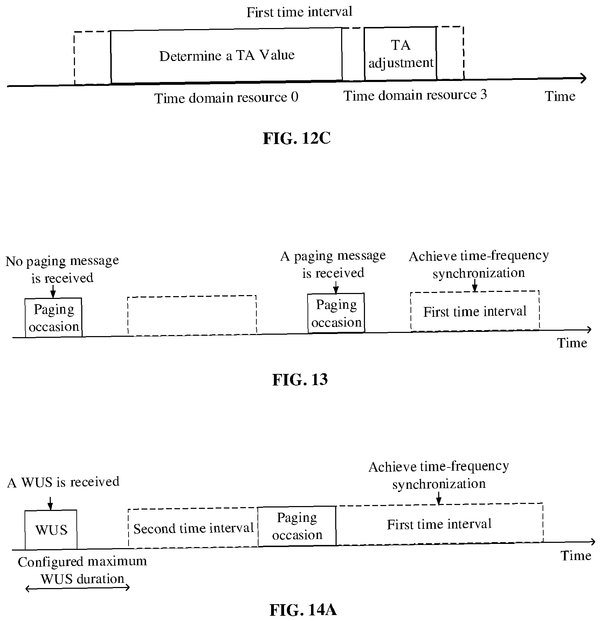

As an example, referring to FIG. 12C, a time domain resource 0 in the first time interval is used by the terminal device to acquire first information and determine synchronization information (e.g., the TA value corresponding to the uplink timing synchronization) based on the first information. Herein, the time domain resource 0 is used by the terminal device to acquire the first information, which includes the following operations. The time domain resource 0 is used by the positioning module of the terminal device to perform the search or the time domain resource 0 is used by the communication module to receive at least one of the system message or the downlink reference signal sent by the network device. The first information is acquired from at least one of a search result, the system message or the downlink reference signal. Further, since the positioning module and the communication module of the terminal device cannot operate at the same time, the time domain resource corresponding to the positioning module and the time domain resource corresponding to the communication module cannot overlap. Herein, the time domain resource 0 may include the time domain resource 1 and the time domain resource 2 in FIG. 12B. The time domain resource 3 in the first time interval is used by the terminal device to perform the TA adjustment based on the determined TA value. Further, after the first time interval, the terminal device may send the first physical channel or signal based on the adjusted TA.

In some embodiments, in order to enable uplink transmission to be immediately performed after the first time interval, the length of the first time interval satisfies at least one of the following features.

The length of the first time interval is greater than or equal to a timing offset length corresponding to the TA value.

The length of the first time interval is greater than or equal to a timing offset length corresponding to a maximum of the TA value.

The length of the first time interval is greater than or equal to a length corresponding to a round trip time between the terminal device and the network device.

In some embodiments, the timing offset length is greater than or equal to a timing offset value Koffset.

How the terminal device acquires the synchronization information based on at least one of the positioning module or the communication module thereof would be described below.

**First mode**

In some embodiments, the terminal device acquires the synchronization information based on a first time domain resource in the first time interval and the positioning module of the terminal device. The first time domain resource is at least part of the time domain resources in the first time interval. Herein, the first time domain resource is not used by the communication module of the terminal device to perform the reception or transmission.

Specifically, the terminal device uses the positioning module to perform the search on the first time domain resource in the first time interval, so as to acquire at least one of the following information of the first information: location information of the terminal device or ephemeris information of a non-service satellite.

**Second mode**

In some embodiments, the terminal device acquires the synchronization information based on a second time domain resource in the first time interval and the communication module of the terminal device, wherein the second time domain resource is at least part of the time domain resources in the first time interval.

Specifically, the terminal device uses the communication module to receive at least one of the system message or the downlink reference signal on the second time domain resource in the first time interval, and acquires, from at least one of the system message or the downlink reference signal, at least one of the following information of the first information: common timing information, common timing change information, common frequency offset information, common frequency offset change information, location information of the network device, or ephemeris information of a service satellite.

**Third mode**

In some embodiments, the terminal device acquires the synchronization information based on the first time domain resource in the first time interval and the positioning module of the terminal device, and acquires the synchronization information based on the second time domain resource in the first time interval and the communication module of the terminal device. The first time domain resource is at least part of the time domain resources in the first time interval, and the second time domain resource is at least part of the time domain resources in the first time interval. The first time domain resource and the second time domain resource do not overlap in the time domain.

Specifically, the terminal device uses the positioning module to perform the search on the first time domain resource in the first time interval, so as to acquire at least one of the following information of the first information: the location information of the terminal device or the ephemeris information of the non-service satellite. The terminal device uses the communication module to receive at least one of the system message or the downlink reference signal on the second time domain resource in the first time interval, and acquires, from at least one of the system message or the downlink reference signal, at least one of the following: the common timing information, the common timing change information, the common frequency offset information, the common frequency offset change information, the location information of the network device, or the ephemeris information of the service satellite.

The technical solutions of the embodiments of the present disclosure would be exemplified below with reference to application examples.

**First application example**

Referring to FIG. 13, taking the first physical channel or signal including the paging message as an example, the first time interval is after the first physical channel or signal. If the terminal device receives the paging message in the paging occasion, the terminal device acquires the synchronization information in the first time interval. Further, the terminal device performs time-frequency synchronization in the first time interval based on the synchronization information, for example, the terminal device performs the TA adjustment. If the terminal device does not receive any paging message in the paging occasion, the terminal device skips the first time interval.

**Second application example**

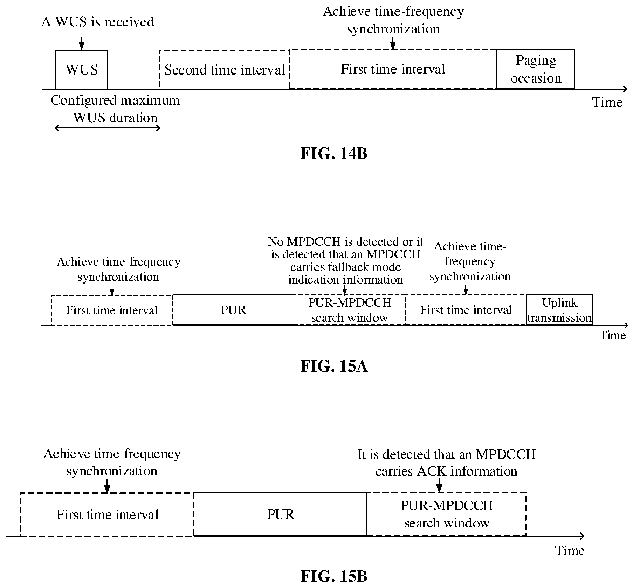

Referring to FIG. 14A and FIG. 14B, taking the first physical channel or signal including the WUS/GWUS and the paging message as an example, the first time interval is after the first physical channel or signal (as shown in FIG. 14A), or the first time interval is between the WUS/GWUS and the paging message (as shown in FIG. 14B). A second time interval is between the WUS/GWUS and the paging message (as shown in FIG. 8 or FIG. 9). The first time interval and the second time interval may not overlap, or may at least partially overlap, which would not be limited in the present disclosure.

If the terminal device receives the WUS/GWUS, the terminal device acquires the synchronization information in the first time interval. Further, the terminal device performs the time-frequency synchronization in the first time interval based on the synchronization information, for example, the terminal performs the TA adjustment. If the terminal device does not receive any WUS/GWUS, the terminal device skips the first time interval.

**Third application example**

The terminal device is configured with a PUR. The terminal device in an idle state may perform PUSCH transmission by using an uplink resource preconfigured by the network device (i.e., the PUR) without accomplishing a random access procedure. The terminal device in a connected state may request to be configured with the PUR or request PUR configuration release. The network device may configure the PUR for the terminal device based on a request of the terminal device, registration information of the terminal device and/or a local policy. The PUR is valid only in a cell where a cell PUR configuration is received.

Referring to FIG. 15A and FIG. 15B, taking the first physical channel or signal including the transmission based on the PUR as an example, the first time interval is before the PUR in the time domain. When an upper layer requests re-establishment or recovery of an RRC connection, and when the terminal device is configured with a valid PUR, the terminal device would acquire the synchronization information in the first time interval. Further, the terminal device performs the time-frequency synchronization in the first time interval based on the synchronization information, for example, the terminal performs the TA adjustment. When a TA validity criterion is satisfied, the terminal device may trigger the transmission based on the PUR. Herein, if a duration of the transmission based on the PUR is long, one or more first time intervals also need to be provided during the uplink transmissions, so as to ensure that the terminal device can perform the time-frequency synchronization again.

As shown in FIG. 15A, after the transmission based on the PUR, the terminal device detects a downlink control channel (e.g., an MPDCCH) scrambled via a PUR-RNTI in a PUR search space window (e.g., a PUR-MPDCCH search window). If no downlink control channel is detected or it is detected that the downlink control channel carries fallback mode indication information, the terminal device performs time-frequency synchronization in a first time interval after the PUR search space window, and then performs uplink transmission.

As shown in FIG. 15B, after the transmission based on the PUR, the terminal device detects a downlink control channel (e.g., an MPDCCH) scrambled via a PUR-RNTI in a PUR search space window (e.g., a PUR-MPDCCH search window). If it is detected that the downlink control channel carries ACK information, the terminal device may stop the detection of the downlink control channel.

In the solution described above, if an end subframe for the PUSCH transmission performed by the terminal device by using the PUR is a subframe n, the terminal device would detect the MPDCCH in the PUR search space window starting from a subframe n+k. As an example, the value of k is 4 or 4+Koffset.

**Fourth application example**

The terminal device is configured or scheduled to transmit the first physical channel or signal, and a time domain resource occupied by the first physical channel or signal is long. Correspondingly, the terminal device may, as predefined or as configured by the network device, include multiple first time intervals in transmission of the first physical channel or signal. The multiple first time intervals may have the same length. Alternatively, at least two of the multiple first time intervals may have different lengths. In some embodiments, a time length of continuous transmission of the first physical channel or signal is less than 256 milliseconds.

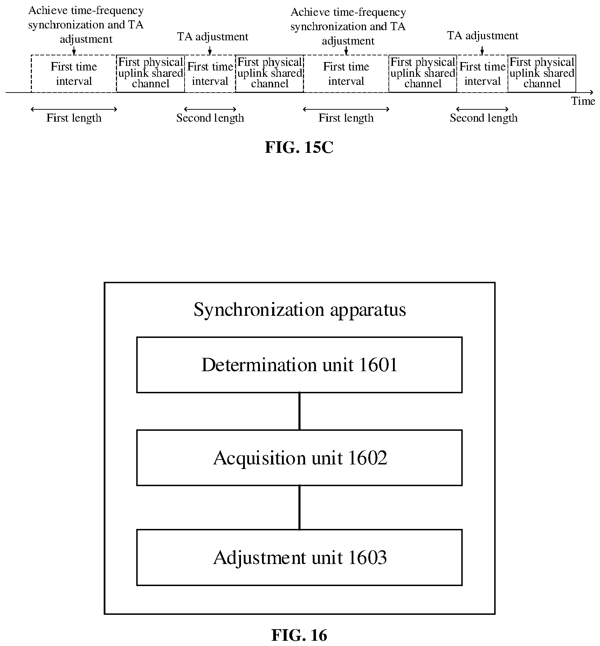

As shown in FIGS. 15C, the first physical channel or signal is a first physical uplink shared channel. The length of the first physical uplink shared channel is 512 milliseconds, and it is assumed that according to a predefined rule, the time length of the continuous transmission of the first physical channel or signal is 128 milliseconds. During transmission of the first physical uplink shared channel, each continuous transmission of 128 milliseconds needs to include one first time interval. That is, a total of four first time intervals are included. Different first time intervals may correspond to different terminal device behaviors. In this example, the first one of the first time interval and the third one of the first time interval are used for the uplink synchronization achievement and the TA adjustment, and correspond to a first length. The second one of the first time interval and the fourth one of the first time interval are used for the TA adjustment, and correspond to a second length. In this example, the first length is greater than the second length.

The technical solutions of the embodiments of the present disclosure may solve the problem of how to perform synchronization between a terminal device and a network device again during continuous transmission of channels or signals.

The preferred embodiments of the present disclosure are described in detail above with reference to the accompanying drawings. However, the present disclosure is not limited to specific details in the embodiments described above. A variety of simple variations may be made to the technical solutions of the present disclosure within the technical concept of the present disclosure, and these simple variations all fall within the scope of protection of the present disclosure. For example, the various specific technical features described in the above specific embodiments can be combined in any appropriate manner as long as no contradiction arises. In order to avoid unnecessary repetitions, various possible combinations are not described in the present disclosure. As another example, various different embodiments of the present disclosure may also be arbitrarily combined, and combinations thereof should likewise be considered as the content disclosed in the present disclosure as long as the combinations do not violate the idea of the present disclosure. As another example, the various embodiments and/or the technical features of the various embodiments described in the present disclosure can be arbitrarily combined with the prior art, and the technical solutions resulting from the combination shall also fall within the scope of protection of the present disclosure.

It should also be appreciated that in the various method embodiments of the present disclosure, the values of the sequence numbers of the processes do not imply the order of execution. The order of execution of each process should be determined by the function and internal logic thereof, and should not set any limitation to the implementation process of the embodiments of the present disclosure. Further, in the embodiments of the present disclosure, the terms "downlink", "uplink", and "sidelink" are configured to indicate transmission directions of signals or data. "Downlink" is configured to indicate that the transmission direction of signals or data is a first transmission direction from a station to a user equipment of a cell. "Uplink" is configured to indicate that the transmission direction of signals or data is a second transmission direction from a user equipment of a cell to a station. "Sidelink" is configured to indicate that the transmission direction of signals or data is a third transmission direction from a user equipment 1 to a user equipment 2. For example, a "downlink signal" indicates that a transmission direction of the signal is the first direction. In addition, in the embodiments of the present disclosure, the term "and/or" is merely to describe the associations of associated objects, indicating that there can be three kinds of relationships. Specifically, A and/or B can indicate three situations in which A exists alone, A and B exist simultaneously, or B exists alone. In addition, the character "/" herein generally indicates that the associated objects before and after this character are in an "or" relationship.

FIG. 16 is a first structural composition diagram of a synchronization apparatus according to an embodiment of the present disclosure, which is applied to a terminal device. As shown in FIG. 16, the synchronization apparatus includes a determination unit 1601 and an acquisition unit 1602.

The determination unit 1601 is configured to determine a first time interval. The first time interval is configured to be used by the terminal device to acquire synchronization information.

The acquisition unit 1602 is configured to acquire the synchronization information based on the first time interval. The synchronization information is used to transmit a first physical channel or signal.

In some embodiments, the synchronization information includes at least one of the following.

Uplink timing synchronization, uplink frequency offset synchronization, downlink timing synchronization, and downlink frequency offset synchronization.

In some embodiments, the synchronization information is acquired by at least one of a positioning module or a communication module of the terminal device.

In some embodiments, the synchronization information is acquired based on first information, and the first information includes at least one of the following.

Timing information, timing change information, frequency offset information, frequency offset change information, location information, or ephemeris information.

In some embodiments, the timing information includes common timing information.

In some embodiments, the timing change information includes common timing change information.

In some embodiments, the frequency offset information includes common frequency offset information.

In some embodiments, the frequency offset change information includes common frequency offset change information.

In some embodiments, the location information includes at least one of location information of the terminal device or location information of a network device.

In some embodiments, the ephemeris information includes at least one of ephemeris information of a service satellite or ephemeris information of a non-service satellite.

The ephemeris information includes at least one of satellite location information or satellite velocity information.

In some embodiments, the communication module of the terminal device is configured to acquire at least one of a system message or a downlink reference signal, and at least one of the system message or the downlink reference signal carries the first information.

In some embodiments, the first physical channel or signal includes an uplink physical channel or an uplink reference signal, and the synchronization information is used to send the first physical channel or signal.

In some embodiments, the first physical channel or signal includes at least one of the following.

A PRACH, a Msg3 in a random access procedure, a PUSCH, a PUCCH, EDT, and transmission based on PUR.

In some embodiments, the first physical channel or signal includes a downlink physical channel or a downlink reference signal, and the synchronization information is used to receive the first physical channel or signal.

In some embodiments, the first physical channel or signal includes at least one of the following.

A WUS, a PDCCH scrambled via a P-RNTI, a paging message, a synchronization signal, and a system message.

In some embodiments, at least part of the time domain resources in the first time interval is not configured to be used by the communication module of the terminal device to perform reception or transmission, and/or

At least part of the time domain resources in the first time interval is configured to be used by the positioning module of the terminal device to perform a search, and/or

At least part of the time domain resources in the first time interval is configured to be used by the communication module of the terminal device to receive at least one of a system message or a downlink reference signal sent by the network device, and/or

At least part of the time domain resources in the first time interval is configured to be used by the terminal device to perform TA adjustment.

In some embodiments, the acquisition unit 1602 is configured to acquire the synchronization information based on a first time domain resource in the first time interval and the positioning module of the terminal device. The first time domain resource is at least part of the time domain resources in the first time interval.

In some embodiments, the first time domain resource is not configured to be used by the communication module of the terminal device to perform reception or transmission.

In some embodiments, the acquisition unit 1602 is configured to acquire the synchronization information based on a second time domain resource in the first time interval and the communication module of the terminal device. The second time domain resource is at least part of the time domain resources in the first time interval.

In some embodiments, the acquisition unit 1602 is configured to acquire the synchronization information based on the first time domain resource in the first time interval and the positioning module of the terminal device. The first time domain resource is at least part of the time domain resources in the first time interval, and the first time domain resource and the second time domain resource do not overlap in the time domain.

In some embodiments, the synchronization information includes a timing advance (TA) value corresponding to uplink timing synchronization of the terminal device, and the apparatus further includes an adjustment unit 1603.

The adjustment unit 1603 is configured to perform the TA adjustment based on the first time interval and the TA value.

In some embodiments, the length of the first time interval satisfies at least one of the following features.

The length of the first time interval is greater than or equal to a timing offset length corresponding to the TA value.

The length of the first time interval is greater than or equal to a timing offset length corresponding to a maximum of the TA value.

The length of the first time interval is greater than or equal to a length corresponding to a round trip time between the terminal device and the network device.

In some embodiments, the length of the first time interval is predefined.

Alternatively, the length of the first time interval is determined according to a predefined rule.

Alternatively, the length of the first time interval is acquired according to configuration information of the network device.

In some embodiments, the start position of the first time interval is predefined.

Alternatively, the start position of the first time interval is determined according to the predefined rule.

Alternatively, the start position of the first time interval is acquired according to the configuration information of the network device.

In some embodiments, the end position of the first time interval is predefined.

Alternatively, the end position of the first time interval is determined according to the predefined rule.

Alternatively, the end position of the first time interval is acquired according to the configuration information of the network device.

In some embodiments, the configuration information of the network device is transmitted via at least one of the following information.

A system message, a paging message, a WUS, an RRC signaling, an MAC CE, or DCI.

In some embodiments, the first time interval is determined according to a first offset value and/or a second offset value. The first offset value is used to determine a distance between a start position of the first time interval and the first physical channel or signal, and the second offset value is used to determine a distance between an end position of the first time interval and the first physical channel or signal.

In some embodiments, the first time interval is before the first physical channel or signal in the time domain, and the first offset value is used to determine a distance between the start position of the first time interval and a start position of the first physical channel or signal.

Alternatively, the first time interval is after the first physical channel or signal in the time domain, and the first offset value is used to determine a distance between an end position of the first physical channel or signal and the start position of the first time interval.

In some embodiments, the first time interval is before the first physical channel or signal in the time domain, and the second offset value is used to determine a distance between an end position of the first time interval and a start position of the first physical channel or signal.

Alternatively, the first time interval is after the first physical channel or signal in the time domain, and the second offset value is used to determine a distance between an end position of the first physical channel or signal and the end position of the first time interval.

In some embodiments, the first time interval has a first association relationship with the first physical channel or signal.

The first association relationship is acquired via at least one of a system message, a paging message, a WUS, an RRC signaling, an MAC CE, or DCI.

Alternatively, the first association relationship is predefined, or the first association relationship is acquired according to the predefined rule.

In some embodiments, the first association relationship is predefined, or the first association relationship is acquired according to a predefined rule, which includes the following.

The first time interval is before the first physical channel or signal in the time domain.

Alternatively, the first time interval is after the first physical channel or signal in the time domain.

Alternatively, the first time interval is located within the first physical channel or signal in the time domain.

In some embodiments, the first time interval has a second association relationship with second information, and the second information includes at least one of the following.

A satellite scenario, a terminal device capability, or a coverage enhancement level.

In some embodiments, the second association relationship is acquired via at least one of a system message, a paging message, a WUS, an RRC signaling, an MAC CE, or DCI.

Alternatively, the second association relationship is predefined, or the second association relationship is acquired according to the predefined rule.

In some embodiments, the second information includes the terminal device capability, and the second association relationship includes the following.

The length of the first time interval is determined according to the terminal device capability.

Alternatively, the length of the first time interval is configured by the network device according to the terminal device capability.

In some embodiments, the second information includes the coverage enhancement level, and the second association relationship includes the following.

A length of the first time interval is determined according to a coverage enhancement level corresponding to the terminal device.

Alternatively, the length of the first time interval is configured by the network device according to the coverage enhancement level.

It should be understood by a person skilled in the art that the relevant description of the synchronization apparatus in the embodiments of the present disclosure may be understood with reference to the relevant description of the synchronization method in the embodiments of the present disclosure.

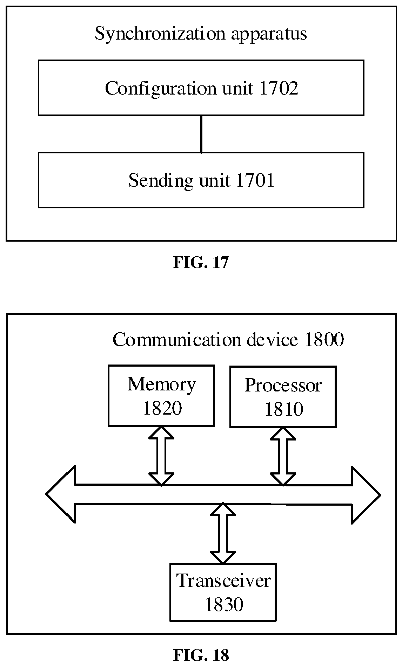

FIG. 17 is a second structural composition diagram of a synchronization apparatus according to an embodiment of the present disclosure, which is applied to a network device. As shown in FIG. 17, the synchronization apparatus includes a sending unit 1701.

The sending unit 1701 is configured to send configuration information of a first time interval to a terminal device. The first time interval is configured to be used by the terminal device to acquire synchronization information, and the synchronization information is used by the terminal device to transmit a first physical channel or signal.

In some embodiments, the configuration information of the first time interval includes at least one of the following:

A length of the first time interval,
A start position of the first time interval, or
An end position of the first time interval.

In some embodiments, the configuration information of the first time interval includes a first offset value and/or a second offset value.

The first offset value is used to determine a distance between the start position of the first time interval and the first physical channel or signal, and the second offset value is used to determine a distance between the end position of the first time interval and the first physical channel or signal.

In some embodiments, the first time interval is before the first physical channel or signal in the time domain, and the first offset value is used to determine a distance between the start position of the first time interval and a start position of the first physical channel or signal.

Alternatively, the first time interval is after the first physical channel or signal in the time domain, and the first offset value is used to determine a distance between an end position of the first physical channel or signal and the start position of the first time interval.

In some embodiments, the first time interval is before the first physical channel or signal in the time domain, and the second offset value is used to determine a distance between the end position of the first time interval and a start position of the first physical channel or signal.

Alternatively, the first time interval is after the first physical channel or signal in the time domain, and the second offset value is used to determine a distance between an end position of the first physical channel or signal and the end position of the first time interval.

In some embodiments, the first time interval has a first association relationship with the first physical channel or signal.

In some embodiments, the sending unit 1701 is further configured to send third information. The third information is used to determine the first association relationship and the third information is carried in at least one of a system message, a paging message, a WUS, an RRC signaling, an MAC CE, or DCI.

In some embodiments, the first time interval has a second association relationship with second information, and the second information includes at least one of the following.

A satellite scenario, a terminal device capability, or a coverage enhancement level.

In some embodiments, the sending unit 1701 is further configured to send fourth information. The fourth information is used to determine the second association relationship and the fourth information is carried in at least one of a system message, a paging message, a WUS, an RRC signaling, an MAC CE, or DCI.

In some embodiments, the second information includes a terminal device capability, and the apparatus further includes a configuration unit 1702.

The configuration unit 1702 is configured to configure the length of the first time interval according to the terminal device capability.

In some embodiments, the second information includes a coverage enhancement level, and the apparatus further includes a configuration unit 1702.

The configuration unit 1702 is configured to configure the length of the first time interval according to the coverage enhancement level.

In some embodiments, the configuration information of the first time interval is transmitted via at least one of the following information.

A system message, a paging message, a WUS, an RRC signaling, an MAC CE, or DCI.

In some embodiments, a first time domain resource in the first time interval is configured to be used by a positioning module of the terminal device to acquire the synchronization information. The first time domain resource is at least part of time domain resources in the first time interval.

In some embodiments, the first time domain resource is not configured to be used by a communication module of the terminal device to perform reception or transmission.

In some embodiments, a second time domain resource in the first time interval is configured to be used by the communication module of the terminal device to acquire the synchronization information. The second time domain resource is at least part of the time domain resources in the first time interval.

In some embodiments, the second time domain resource in the first time interval and the first time domain resource in the first time interval do not overlap, and the first time domain resource is configured to be used by the positioning module of the terminal device to acquire the synchronization information.

In some embodiments, the synchronization information includes a TA value corresponding to uplink timing synchronization of the terminal device, and the length of the first time interval satisfies at least one of the following features.

The length of the first time interval is greater than or equal to a timing offset length corresponding to the TA value.

The length of the first time interval is greater than or equal to a timing offset length corresponding to a maximum of the TA value.

The length of the first time interval is greater than or equal to a length corresponding to a round trip time between the terminal device and the network device.

It should be understood by a person skilled in the art that the relevant description of the synchronization apparatus in the embodiments of the present disclosure may be understood with reference to the relevant description of the synchronization method in the embodiments of the present disclosure.

FIG. 18 is a structural diagram of a communication device 1800 according to an embodiment of the present disclosure. The communication device may a terminal device, or may be a network device. The communication device 1800 shown in FIG. 18 includes a processor 1810. The processor 1810 is configured to invoke and run a computer program from a memory to implement the methods in the embodiments of the present disclosure.

Optionally, as shown in FIG. 18, the communication device 1800 also includes a memory 1820. The processor 1810 is configured to invoke and run a computer program from the memory 1820 to implement the methods in the embodiments of the present disclosure.

The memory 1820 may be one separate component independent of the processor 1810, or may be integrated in the processor 1810.

Optionally, as shown in FIG. 18, the communication device 1800 may further include a transceiver 1830. The processor 1810 may control the transceiver 1830 to perform communication with other devices. Specifically, the transceiver may send information or data to other devices, or receive information or data sent by other devices.

The transceiver 1830 may include a transmitter and a receiver. The transceiver 1830 may further include an antenna, and the number of antennas may be one or more.

Optionally, the communication device 1800 may specifically be a network device of the embodiments of the present disclosure, and the communication device 1800 may implement corresponding processes implemented by the network device in the respective methods of the embodiments of the present disclosure, which will not be repeated here for the sake of brevity.

Optionally, the communication device 1800 may specifically be a mobile terminal/terminal device of the embodiments of the present disclosure, and the communication device 1800 may implement corresponding processes implemented by the mobile terminal/terminal device in the respective methods of the embodiments of the present disclosure, which will not be repeated here for the sake of brevity.

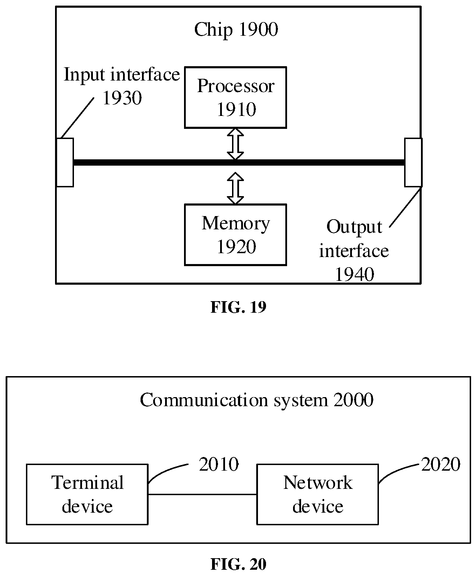

FIG. 19 is a structural diagram of a chip according to an embodiment of the present disclosure. The chip 1900 shown in FIG. 19 includes a processor 1910. The processor 1910 is configured to invoke and run a computer program from a memory to implement the methods in the embodiments of the present disclosure.

Optionally, as shown in FIG. 19, the chip 1900 may further include a memory 1920. The processor 1910 may invoke and run a computer program from the memory 1920 to implement the methods in the embodiments of the present disclosure.

The memory 1920 may be one separate component independent of the processor 1910, or may be integrated in the processor 1910.

Optionally, the chip 1900 may further include an input interface 1930. The processor 1910 may control the input interface 1930 to perform communication with other devices or chips. Specifically, the input interface may obtain information or data sent by other devices or chip.

Optionally, the chip 1900 may further include an output interface 1940. The processor 1910 may control the output interface 1940 to perform communication with other devices or chips. Specifically, the output interface may output information or data to other devices or chips.

Optionally, the chip may be applied to a network device in the embodiments of the present disclosure, and the chip may implement corresponding processes implemented by the network device in the respective methods of the embodiments of the present disclosure, which will not be repeated here for the sake of brevity.

Optionally, the chip may be applied to a mobile terminal/terminal device in the embodiments of the present disclosure, and the chip may implement corresponding processes implemented by the mobile terminal/terminal device in the respective methods of the embodiments of the present disclosure, which will not be repeated here for the sake of brevity.

It should be understood that the chip mentioned in the embodiment of the present disclosure may also be referred to as a system-level chip, a system chip, a chip system, or a system-on-chip, or the like.

FIG. 20 is a block diagram of a communication system 2000 according to an embodiment of the present disclosure. As shown in FIG. 20, the communication system 2000 includes a terminal device 2010 and a network device 2020.

The terminal device 2010 is configured to implement corresponding functions implemented by the terminal device in the methods described above, and the network device 2020 is configured to implement corresponding functions implemented by the network device in the methods described above, which will not be repeated here for the sake of brevity.

It should be understood that the processor of the embodiments of the present disclosure may be an integrated circuit chip with signal processing capability. In the implementation process, each step of the above method embodiments can be accomplished by an integrated logic circuit of hardware or by an instruction in form of software in the processor. The processor described above may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, steps, and logical block diagrams disclosed in the embodiments of the present disclosure. The general purpose processor may be a microprocessor or any conventional processor or the like. The steps of the method disclosed in the embodiments of the present disclosure can be directly accomplished by the hardware decoding processor, or be accomplished by the combination of hardware and software modules in the decoding processor. The software module may be located in a Random Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads the information in the memory to implement the steps of the foregoing methods in combination with the hardware.

It can be appreciated that the memory in embodiments of the present disclosure may be a volatile memory or a non-volatile memory, or may include both the volatile memory and the non-volatile memory. The nonvolatile memory may be a ROM, a PROM, an Erasable PROM (EPROM), an EEPROM, or a flash memory. The volatile memory may be a RAM that functions as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memory is an example but not a limiting description. For example, the memory in embodiments of the present disclosure may also be a SRAM, a DRAM, a SDRAM, a DDR SDRAM, an ESDRAM, a SLDRAM, a DR RAM, and the like. That is, the memories in the embodiments of the present disclosure are intended to include, but are not limited to, these and any other suitable types of memories.

Embodiments of the present disclosure also provide a computer-readable storage medium configured to store computer programs.

Optionally, the computer-readable storage medium can be applied to the network device in the embodiments of the present disclosure, and the computer programs enable the computer to implement the corresponding processes realized by the network device in the various methods of the embodiments of the present disclosure, which is not repeated here for the sake of brevity.

Optionally, the computer-readable storage medium can be applied to the mobile terminal/UE in the embodiments of the present disclosure, and the computer programs enable the computer to implement the corresponding processes realized by the mobile terminal/UE in the various methods of the embodiments of the present disclosure, which is not repeated here for the sake of brevity

Embodiments of the present disclosure also provide a computer program product including computer program instructions.

Optionally, the computer program product can be applied to the network device in the embodiments of the present disclosure, and the computer program instructions enable the computer to implement the corresponding processes realized by the network device in the various methods of the embodiments of the present disclosure, which is not repeated here for the sake of brevity.

Optionally, the computer program product can be applied to the mobile terminal/UE in the embodiments of the present disclosure, and the computer program instructions enable the computer to implement the corresponding processes realized by the mobile terminal/UE in the various methods of the embodiments of the present disclosure, which is not repeated here for the sake of brevity.

Embodiments of the present disclosure also provide a computer program including computer program instructions.

Optionally, the computer program can be applied to the network device in the embodiments of the present disclosure, and the computer program enables the computer to implement the corresponding processes realized by the network device in the various methods of the embodiments of the present disclosure, which is not repeated here for the sake of brevity.

Optionally, the computer program can be applied to the mobile terminal/UE in the embodiments of the present disclosure, and the computer program enables the computer to implement the corresponding processes realized by the mobile terminal/UE in the various methods of the embodiments of the present disclosure, which is not repeated here for the sake of brevity.

Those skilled in the art will appreciate that the various example units and algorithm steps described in connection with the embodiments disclosed herein can be implemented in electronic hardware or a combination of computer software and electronic hardware. Whether these functions are performed in hardware or software form depends on specific disclosures and design constraints of the technical scheme. Those skilled may use different methods for each specific disclosure to implement the described functions but such implementation should not be considered beyond the scope of the present disclosure.

Those skilled in the art will clearly appreciate that for convenience and conciseness of description, the specific operating processes of the above-mentioned systems, devices and units may refer to the corresponding processes in the aforementioned method embodiments and will not be repeated herein.

In the several embodiments provided herein it should be understood that the disclosed systems, devices and methods may be implemented in other ways. For example, the above-mentioned embodiments of the device are only schematic. For example, the division of the unit is only a logical functional division, and in practice, there may be another division manner. For example, multiple units or components may be combined or integrated into another system, or some features may be ignored or not performed. On the other hand, the coupling or direct coupling or communication connection between each other illustrated or discussed may be indirect coupling or communication connection through some interface, device or unit, and may be electrical, mechanical or other forms.

The units illustrated as separate elements may or may not be physically separated, and the elements displayed as units may or may not be physical units, i.e., they may be located in one place, or may be distributed over multiple network units. Some or all of the units may be selected according to actual needs to achieve the objectives of the embodiments of the present disclosure.

In addition, the functional units in various embodiments of the present disclosure may be integrated in one processing unit, or each unit may exist physically individually, or two or more units may be integrated in one unit.

The functions may be stored in a computer-readable storage medium if implemented in form of software functional units and sold or used as stand-alone products. Based on such an understanding, the essence of the technical solutions of the present disclosure, or the part that contributes to the related technologies, or part of the technical solutions can be embodied in the form of a software product stored in a storage medium including several instructions, which can be executed by a computer device (which may be a personal computer, a server, or a network device, etc.) to implement all or part of the operations of the method described in the various embodiments of the present disclosure. The foregoing storage medium includes a Universal Serial Bus (USB) flash drive, a removable hard disk, a Read-Only Memory (ROM), a Random Access Memory (RAM), a magnetic disk, an optical disk, or any other medium that can store program code.

The foregoing descriptions are merely specific embodiments of the present disclosure, but the scope of protection of the present disclosure is not limited thereto. Any change or replacement readily contemplated by a person skilled in the art within the technical scope disclosed in the present disclosure shall fall within the scope of protection of the present disclosure. Accordingly, the scope of protection of the present disclosure shall be subject to the scope of protection of the claims.

**Claims**

1. A synchronization method, comprising:

   determining, by a terminal device, a first time interval, wherein the first time interval is configured to be used by the terminal device to acquire synchronization information; and
   acquiring, by the terminal device, the synchronization information based on the first time interval, the synchronization information being used to transmit a first physical channel or signal.

2. The method according to claim 1, wherein the synchronization information comprises at least one of:
   uplink timing synchronization, uplink frequency offset synchronization, downlink timing synchronization, or downlink frequency offset synchronization.

3. The method according to claim 1 or 2, wherein the synchronization information is acquired by at least one of a positioning module or a communication module of the terminal device.

4. The method according to any one of claims 1 to 3, wherein the synchronization information is acquired based on first information, and the first information comprises at least one of:
   timing information, timing change information, frequency offset information, frequency offset change information, location information, or ephemeris information.

5. The method according to claim 4, wherein the timing information comprises common timing information.

6. The method according to claim 4 or 5, wherein the timing change information comprises common timing change information.

7. The method according to any one of claims 4 to 6, wherein the frequency offset information comprises common frequency offset information.

8. The method according to any one of claims 4 to 7, wherein the frequency offset change information comprises common frequency offset change information.

9. The method according to any one of claims 4 to 8, wherein the location information comprises at least one of location information of the terminal device or location information of a network device.

10. The method according to any one of claims 4 to 9, wherein the ephemeris information comprises at least one of ephemeris information of a service satellite or ephemeris information of a non-service satellite,
    wherein the ephemeris information comprises at least one of satellite location information or satellite velocity information.

**11.** The method according to any one of claims 4 to 10, wherein a communication module of the terminal device is configured to acquire at least one of a system message or a downlink reference signal, and at least one of the system message or the downlink reference signal carries the first information.

**12.** The method according to any one of claims 1 to 11, wherein the first physical channel or signal comprises an uplink physical channel or an uplink reference signal, and the synchronization information is used to send the first physical channel or signal.

**13.** The method according to claim 12, wherein the first physical channel or signal comprises at least one of:
a Physical Random Access Channel (PRACH), a message 3 (Msg3) in a random access procedure, a Physical Uplink Shared Channel (PUSCH), a Physical Uplink Control Channel (PUCCH), Early Data Transmission (EDT), or transmission based on Preconfigured Uplink Resource (PUR).

**14.** The method according to any one of claims 1 to 11, wherein the first physical channel or signal comprises a downlink physical channel or a downlink reference signal, and the synchronization information is used to receive the first physical channel or signal.

**15.** The method according to claim 14, wherein the first physical channel or signal comprises at least one of:
a Wake-Up Signal (WUS), a Physical Downlink Control Channel (PDCCH) scrambled via a Paging-Radio Network Temporary Identity (P-RNTI), a paging message, a synchronization signal, or a system message.

**16.** The method according to any one of claims 1 to 15, wherein:

at least part of time domain resources in the first time interval is not configured to be used by a communication module of the terminal device to perform reception or transmission, and/or
at least part of the time domain resources in the first time interval is configured to be used by a positioning module of the terminal device to perform a search, and/or
at least part of the time domain resources in the first time interval is configured to be used by the communication module of the terminal device to receive at least one of a system message or a downlink reference signal sent by a network device, and/or
at least part of the time domain resources in the first time interval is configured to be used by the terminal device to perform Timing Advance (TA) adjustment.

**17.** The method according to any one of claims 1 to 16, wherein acquiring, by the terminal device, the synchronization information based on the first time interval comprises:
acquiring, by the terminal device, the synchronization information based on a first time domain resource in the first time interval and a positioning module of the terminal device, wherein the first time domain resource is at least part of time domain resources in the first time interval.

**18.** The method according to claim 17, wherein the first time domain resource is not configured to be used by a communication module of the terminal device to perform reception or transmission.

**19.** The method according to any one of claims 1 to 18, wherein the acquiring, by the terminal device, the synchronization information based on the first time interval comprises:
acquiring, by the terminal device, the synchronization information based on a second time domain resource in the first time interval and a communication module of the terminal device, wherein the second time domain resource is at least part of time domain resources in the first time interval.

**20.** The method according to claim 19, wherein the terminal device acquires the synchronization information based on a first time domain resource in the first time interval and a positioning module of the terminal device, wherein the first time domain resource is at least part of the time domain resources in the first time interval, and the first time domain resource and the second time domain resource do not overlap in time domain.

**21.** The method according to any one of claims 1 to 20, wherein the synchronization information comprises a Timing Advance (TA) value corresponding to uplink timing synchronization of the terminal device, and
the terminal device performs TA adjustment based on the first time interval and the TA value.

**22.** The method according to claim 21, wherein a length of the first time interval satisfies at least one of:

the length of the first time interval being greater than or equal to a timing offset length corresponding to the TA value,

the length of the first time interval being greater than or equal to a timing offset length corresponding to a maximum of the TA value, or

the length of the first time interval being greater than or equal to a length corresponding to a round trip time between the terminal device and a network device.

23. The method according to any one of claims 1 to 22, wherein

a length of the first time interval is predefined, or
the length of the first time interval is determined according to a predefined rule, or
the length of the first time interval is acquired according to configuration information of a network device.

24. The method according to any one of claims 1 to 23, wherein

a start position of the first time interval is predefined, or
the start position of the first time interval is determined according to a predefined rule, or
the start position of the first time interval is acquired according to the configuration information of a network device.

25. The method according to any one of claims 1 to 24, wherein

an end position of the first time interval is predefined, or
the end position of the first time interval is determined according to a predefined rule, or
the end position of the first time interval is acquired according to the configuration information of a network device.

26. The method according to any one of claims 23 to 25, wherein the configuration information of the network device is transmitted via at least one of:
a system message, a paging message, a Wake-Up Signal (WUS), a Radio Resource Control (RRC) signaling, a Media Access Control (MAC) Control Element (CE), or Downlink Control Information (DCI).

27. The method according to any one of claims 1 to 26, wherein the first time interval is determined according to at least one of a first offset value or a second offset value, wherein the first offset value is used to determine a distance between a start position of the first time interval and the first physical channel or signal, and the second offset value is used to determine a distance between an end position of the first time interval and the first physical channel or signal.

28. The method according to claim 27, wherein

the first time interval is before the first physical channel or signal in time domain, and the first offset value is used to determine a distance between the start position of the first time interval and a start position of the first physical channel or signal, or
the first time interval is after the first physical channel or signal in the time domain, and the first offset value is used to determine a distance between an end position of the first physical channel or signal and the start position of the first time interval.

29. The method according to claim 27, wherein

the first time interval is before the first physical channel or signal in time domain, and the second offset value is used to determine a distance between the end position of the first time interval and a start position of the first physical channel or signal, or
the first time interval is after the first physical channel or signal in the time domain, and the second offset value is used to determine a distance between an end position of the first physical channel or signal and the end position of the first time interval.

30. The method according to any one of claims 1 to 29, wherein the first time interval has a first association relationship with the first physical channel or signal,

wherein the first association relationship is acquired via at least one of a system message, a paging message, a Wake-Up Signal (WUS), a Radio Resource Control (RRC) signaling, a Media Access Control (MAC) Control Element (CE), or Downlink Control Information (DCI), or
the first association relationship is predefined, or the first association relationship is acquired according to a predefined rule.

31. The method according to claim 30, wherein the first association relationship being predefined, or the first association relationship being acquired according to the predefined rule comprises:

the first time interval being before the first physical channel or signal in time domain, or
the first time interval being after the first physical channel or signal in the time domain, or
the first time interval being located within the first physical channel or signal in the time domain.

32. The method according to any one of claims 1 to 31, wherein the first time interval has a second association relationship with second information, and the second information comprises at least one of:
a satellite scenario, a terminal device capability, or a coverage enhancement level.

33. The method according to claim 32, wherein the second association relationship is acquired via at least one of a system message, a paging message, a Wake-Up Signal (WUS), a Radio Resource Control (RRC) signaling, a Media Access Control (MAC) Control Element (CE), and Downlink Control Information (DCI), or
the second association relationship is predefined, or the second association relationship is acquired according to a predefined rule.

34. The method according to claim 32 or 33, wherein the second information comprises the terminal device capability, and the second association relationship comprises:

a length of the first time interval being determined according to the terminal device capability, or
the length of the first time interval being configured by a network device according to the terminal device capability.

35. The method according to claim 32 or 33, wherein the second information comprises the coverage enhancement level, and the second association relationship comprises:

a length of the first time interval being determined according to a coverage enhancement level corresponding to the terminal device, or
the length of the first time interval being configured by a network device according to the coverage enhancement level.

36. A synchronization method, comprising:
sending, by a network device, configuration information of a first time interval to a terminal device, wherein the first time interval is configured to be used by the terminal device to acquire synchronization information, and the synchronization information is configured to be used by the terminal device to transmit a first physical channel or signal.

37. The method according to claim 36, wherein the configuration information of the first time interval comprises at least one of:

a length of the first time interval,
a start position of the first time interval, or
an end position of the first time interval.

38. The method according to claim 36 or 37, wherein the configuration information of the first time interval comprises at least one of a first offset value or a second offset value,
wherein the first offset value is used to determine a distance between a start position of the first time interval and the first physical channel or signal, and the second offset value is used to determine a distance between an end position of the first time interval and the first physical channel or signal.

39. The method according to claim 38, wherein

the first time interval is before the first physical channel or signal in time domain, and the first offset value is used to determine a distance between the start position of the first time interval and a start position of the first physical channel or signal, or

the first time interval is after the first physical channel or signal in the time domain, and the first offset value is used to determine a distance between an end position of the first physical channel or signal and the start position of the first time interval.

40. The method according to claim 38, wherein

the first time interval is before the first physical channel or signal in time domain, and the second offset value is used to determine a distance between the end position of the first time interval and a start position of the first physical channel or signal, or
the first time interval is after the first physical channel or signal in the time domain, and the second offset value is used to determine a distance between an end position of the first physical channel or signal and the end position of the first time interval.

41. The method according to any one of claims 36 to 40, wherein the first time interval has a first association relationship with the first physical channel or signal.

42. The method according to claim 41, further comprising:
sending, by the network device, third information, wherein the third information is used to determine the first association relationship and is carried in at least one of a system message, a paging message, a Wake-Up Signal (WUS), a Radio Resource Control (RRC) signaling, a Media Access Control (MAC) Control Element (CE), or Downlink Control Information (DCI).

43. The method according to any one of claims 36 to 42, wherein the first time interval has a second association relationship with second information, and the second information comprises at least one of:
a satellite scenario, a terminal device capability, or a coverage enhancement level.

44. The method according to claim 43, further comprising:
sending, by the network device, fourth information, wherein the fourth information is used to determine the second association relationship and is carried in at least one of a system message, a paging message, a Wake-Up Signal (WUS), a Radio Resource Control (RRC) signaling, a Media Access Control (MAC) Control Element (CE), or Downlink Control Information (DCI).

45. The method according to claim 43 or 44, wherein the second information comprises the terminal device capability, and the method further comprises:
configuring, by the network device, a length of the first time interval according to the terminal device capability.

46. The method according to claim 43 or 44, wherein the second information comprises the coverage enhancement level, and the method further comprises:
configuring, by the network device, a length of the first time interval according to the coverage enhancement level.

47. The method according to any one of claims 36 to 46, wherein the configuration information of the first time interval is transmitted via at least one of:
a system message, a paging message, a Wake-Up Signal (WUS), a Radio Resource Control (RRC) signaling, a Media Access Control (MAC) Control Element (CE), or Downlink Control Information (DCI).

48. The method according to any one of claims 36 to 47, wherein a first time domain resource in the first time interval is configured to be used by a positioning module of the terminal device to acquire the synchronization information, wherein the first time domain resource is at least part of time domain resources in the first time interval.

49. The method according to claim 48, wherein the first time domain resource is not configured to be used by a communication module of the terminal device to perform reception or transmission.

50. The method according to any one of claims 36 to 49, wherein a second time domain resource in the first time interval is configured to be used by a communication module of the terminal device to acquire the synchronization information, wherein the second time domain resource is at least part of time domain resources in the first time interval.

51. The method according to claim 50, wherein the second time domain resource in the first time interval and a first time domain resource in the first time interval do not overlap, and the first time domain resource is configured to be used by a positioning module of the terminal device to acquire the synchronization information.

52. The method according to any one of claims 36 to 51, wherein the synchronization information comprises a Timing Advance (TA) value corresponding to uplink timing synchronization of the terminal device, and a length of the first time interval satisfies at least one of:

the length of the first time interval being greater than or equal to a timing offset length corresponding to the TA value,
the length of the first time interval being greater than or equal to a timing offset length corresponding to a maximum of the TA value, or
the length of the first time interval being greater than or equal to a length corresponding to a round trip time between the terminal device and the network device.

53. A synchronization apparatus, applied to a terminal device, the apparatus comprising:

a determination unit, configured to determine a first time interval, wherein the first time interval is configured to be used by the terminal device to acquire synchronization information; and
an acquisition unit, configured to acquire the synchronization information based on the first time interval, wherein the synchronization information is configured to transmit a first physical channel or signal.

54. A synchronization apparatus, applied to a network device, the apparatus comprising:
a sending unit, configured to send configuration information of a first time interval to a terminal device, wherein the first time interval is configured to be used by the terminal device to acquire synchronization information, and the synchronization information is configured to be used by the terminal device to transmit a first physical channel or signal.

55. A terminal device, comprising: a processor and a memory, wherein the memory is configured to store a computer program, and the processor is configured to invoke and run the computer program stored in the memory to perform the method according to any one of claims 1 to 35.

56. A network device, comprising: a processor and a memory, wherein the memory is configured to store a computer program, and the processor is configured to invoke and run the computer program stored in the memory to perform the method according to any one of claims 36 to 52.

57. A chip, comprising: a processor, configured to invoke and run a computer program from a memory to make a device installed with the chip to perform the method according to any one of claims 1 to 35.

58. A chip, comprising: a processor, configured to invoke and run a computer program from a memory to make a device installed with the chip to perform the method according to any one of claims 36 to 52.

59. A computer-readable storage medium configured to store a computer program, wherein the computer program causes a computer to perform the method according to any one of claims 1 to 35.

60. A computer-readable storage medium configured to store a computer program, wherein the computer program causes a computer to perform the method according to any one of claims 36 to 52.

61. A computer program product, comprising computer program instructions, wherein the computer program instructions cause a computer to perform the method according to any one of claims 1 to 35.

62. A computer program product, comprising computer program instructions, wherein the computer program instructions cause a computer to perform the method according to any one of claims 36 to 52.

63. A computer program that causes a computer to perform the method according to any one of claims 1 to 35.

64. A computer program that causes a computer to perform the method according to any one of claims 36 to 52.

**FIG. 1**

**FIG. 2**

EP 4 319 246 A1

1202

1201

1203

FIG. 3

Satellite

Feeder link

Data network

Service link

Gateway

FIG. 4

30

Satellite    Interstar
                link

Feeder link

Service
link

Feeder link

Data
network

Gateway

**FIG. 5**

Network
device side    n
downlink

Delay
Terminal device    n
side downlink

TA

Terminal
device side    n
uplink

Delay
Network device    n
side uplink

**FIG. 6**

Network
device side  | n |   |   |   |   |   |   |   |   |   |   |   |   |   |   |   |   |   |   |   |
downlink

← Delay →

Terminal device | n |   |   |   |   |   |   |   |   |   |   |   |   |   |   |   |   |   |   |
side downlink

←TA→

Terminal
device side | n |   |   |   |   |   |   |   |   |   |   |   |   |   |   |   |   |   |   |   |
uplink

←── Delay ──→

Network
device side |   |   |   |   |   |   |   |   |   |   |   |   | n |   |   |   |   |   |   |   |
uplink

Frame timing offset
between downlink-uplink
at network device side

**FIG. 7**

Frequency

| WUS | | PO |

→ Time

←── Configured maximum ──→ ←Interval→
WUS duration

**FIG. 8**

Frequency

| WUS 3 | WUS 1 |
| WUS 2 | WUS 0 |

| PO |

→ Time

←── Configured maximum ──→←── Configured maximum ──→ ←Interval→
WUS duration              WUS duration

**FIG. 9**

A terminal device determines a first time interval. The first time interval is configured to be used by the terminal device to acquire synchronization information

1001

The terminal device acquires the synchronization information based on the first time interval. The synchronization information is used to transmit a first physical channel or signal

1002

**FIG. 10**

First time interval

First physical channel or signal

Second offset value

Time

First offset value

**FIG. 11A**

First physical channel or signal

First time interval

First offset value

Time

Second offset value

**FIG. 11B**

Original first physical channels or signals

First physical channels or signals separated by a first time interval

Time

First time interval

**FIG. 11C**

First time interval

Positioning module

Time domain resource 1

Time

**FIG. 12A**

First time interval

Positioning module

Communication module

Time domain resource 1

Time domain resource 2

Time

**FIG. 12B**

**First time interval**

| Determine a TA Value | TA adjustment |

Time domain resource 0 — Time domain resource 3 — Time

**FIG. 12C**

No paging message is received ↓

Paging occasion

A paging message is received ↓

Paging occasion

Achieve time-frequency synchronization ↓

First time interval

Time

**FIG. 13**

A WUS is received ↓

WUS

Second time interval

Paging occasion

Achieve time-frequency synchronization ↓

First time interval

Time

Configured maximum WUS duration

**FIG. 14A**

A WUS is received

Achieve time-frequency
synchronization

| WUS | Second time interval | First time interval | Paging occasion |

Configured maximum
WUS duration

Time

**FIG. 14B**

Achieve time-frequency
synchronization

No MPDCCH is detected or it
is detected that an MPDCCH
carries fallback mode
indication information

Achieve time-
frequency
synchronization

| First time interval | PUR | PUR-MPDCCH search window | First time interval | Uplink transmission |

Time

**FIG. 15A**

Achieve time-frequency
synchronization

It is detected that an MPDCCH
carries ACK information

| First time interval | PUR | PUR-MPDCCH search window |

Time

**FIG. 15B**

Achieve time-frequency
synchronization and TA
adjustment

TA adjustment

Achieve time-frequency
synchronization and TA
adjustment

TA adjustment

| First time interval | First physical uplink shared channel | First time interval | First physical uplink shared channel | First time interval | First physical uplink shared channel | First time interval | First physical uplink shared channel |

Time

First length  Second length  First length  Second length

**FIG. 15C**

Synchronization apparatus

Determination unit 1601

Acquisition unit 1602

Adjustment unit 1603

**FIG. 16**

**FIG. 17**

**FIG. 18**

Chip 1900

Input interface
1930

Processor
1910

Memory
1920

Output
interface
1940

**FIG. 19**

Communication system 2000

Terminal
device

2010

Network
device

2020

**FIG. 20**

## INTERNATIONAL SEARCH REPORT

International application No.

**PCT/CN2021/084168**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 间隔, 同步, 配置, 信息, 定时, 获取, 物理信道, 频率, 时间, 时域, 频偏, TA, GAP, configure, time , frequency

### C. DOCUMENTS CONSIDERED TO BE RELEVANT

| Category* | Citation of document, with indication, where appropriate, of the relevant passages | Relevant to claim No. |
|---|---|---|
| X | CN 111064539 A (ZHANXUN SEMICONDUCTOR (NANJING) CO., LTD.) 24 April 2020 (2020-04-24)<br>  description paragraphs [0031]-[0153] | 1-64 |
| X | CN 110012524 A (VIVO COMMUNICATION TECHNOLOGY CO., LTD.) 12 July 2019 (2019-07-12)<br>  description paragraphs [0027]-[0264] | 1-64 |
| A | CN 110830206 A (SPREADTRUM COMMUNICATIONS SHANGHAI INC.) 21 February 2020 (2020-02-21)<br>  entire document | 1-64 |
| A | CN 112492623 A (HUAWEI TECHNOLOGIES CO., LTD.) 12 March 2021 (2021-03-12)<br>  entire document | 1-64 |
| A | US 2020374164 A1 (TELEFONAKTIEBOLAGET LM ERICSSON (PUBL)) 26 November 2020 (2020-11-26)<br>  entire document | 1-64 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 November 2021** | **05 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/084168**

| Patent document cited in search report | | | Publication date (day/month/year) | Patent family member(s) | | | Publication date (day/month/year) |
|---|---|---|---|---|---|---|---|
| CN | 111064539 | A | 24 April 2020 | WO | 2021128899 | A1 | 01 July 2021 |
| CN | 110012524 | A | 12 July 2019 | BR | 112020013668 | A2 | 01 December 2020 |
| | | | | KR | 20200088886 | A | 23 July 2020 |
| | | | | KR | 102308106 | B1 | 05 October 2021 |
| | | | | EP | 3737163 | A1 | 11 November 2020 |
| | | | | EP | 3737163 | A4 | 16 December 2020 |
| | | | | WO | 2019134643 | A1 | 11 July 2019 |
| | | | | JP | 2021510246 | A | 15 April 2021 |
| | | | | AU | 2019205055 | A1 | 23 July 2020 |
| | | | | AU | 2019205055 | B2 | 19 August 2021 |
| | | | | US | 2020374821 | A1 | 26 November 2020 |
| | | | | IN | 202027033164 | A | 02 October 2020 |
| CN | 110830206 | A | 21 February 2020 | None | | | |
| CN | 112492623 | A | 12 March 2021 | WO | 2019020011 | A1 | 31 January 2019 |
| | | | | CN | 109302739 | A | 01 February 2019 |
| | | | | CN | 109302739 | B | 17 November 2019 |
| US | 2020374164 | A1 | 26 November 2020 | WO | 2020236051 | A1 | 26 November 2020 |

Form PCT/ISA/210 (patent family annex) (January 2015)